# EUROPÄISCHE PATENTSCHRIFT

(11) **EP 2 771 868 B1**
(45) Veröffentlichungstag und Bekanntmachung des Hinweises auf die Patenterteilung: **30.12.2015**
(21) Anmeldenummer: 12783521.3
(22) Anmeldetag: 25.10.2012
(51) Int. Cl.: G07D 7/08, G01N 29/11, G01N 29/04, G01N 29/34, G01N 29/36

(54) **VERFAHREN UND VORRICHTUNG ZUR UNTERSUCHUNG EINES BLATT- ODER KARTENFÖRMIGEN WERTDOKUMENTS MIT EINEM SICHERHEITSMERKMAL MIT EINEM HOHLRAUM ODER MEHREREN HOHLRÄUMEN**
METHOD AND DEVICE FOR EXAMINING A SHEET-SHAPED OR CARD-SHAPED VALUABLE DOCUMENT HAVING A SECURITY FEATURE HAVING ONE OR MORE CAVITIES
PROCÉDÉ ET DISPOSITIF PERMETTANT DE CONTRÔLER UN DOCUMENT SÉCURISÉ SOUS FORME DE FEUILLE OU DE CARTE, MUNI D'UN SIGNE DE SÉCURITÉ COMPRENANT UNE OU PLUSIEURS CAVITÉS

(30) Priorität: 28.10.2011 DE 102011117239
(43) Veröffentlichungstag der Anmeldung: 03.09.2014
(73) Patentinhaber: Giesecke & Devrient GmbH, 81677 München (DE)
(72) Erfinder: DOMKE, Jan, 85591 Vaterstetten (DE); KOKRHOUN, Stefan, 82194 Gröbenzell (DE); RENNER, Patrick, 83677 Reichersbeuern (DE); GREGAREK, André, 81671 München (DE)
(86) Internationale Anmeldenummer: PCT/EP2012/004475
(87) Internationale Veröffentlichungsnummer: WO 2013/060465

(56) Entgegenhaltungen:
- WO-A1-2008/009384
- DE-A1-102005 045 566
- DE-A1-102006 061 337

## Beschreibung

Die vorliegende Erfindung betrifft ein Verfahren zur Untersuchung eines blatt- oder kartenförmigen Wertdokuments mit einem Sicherheitsmerkmal, das einen oder mehrere in dem Wertdokument ausgebildete Hohlräume aufweist und eine entsprechende Vorrichtung zur Durchführung des Verfahrens.

Unter Wertdokumenten werden dabei blatt- oder kartenförmige Gegenstände verstanden, die beispielsweise einen monetären Wert oder eine Berechtigung repräsentieren und daher nicht beliebig durch Unbefugte herstellbar sein sollen. Solche Wertdokumente weisen nicht einfach herzustellende oder zu kopierende Merkmale auf, deren Vorhandensein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten.

In DE 10 2006 061337 A1 ist eine Vorrichtung zur Abgabe und/oder zum Empfang von Ultraschall in einem vorgegebenen Frequenzbereich beschrieben, die wenigstens einen Ultraschallwandler zur Wandlung von Ultraschall in elektrische Signale und/ oder zur Umwandlung von elektrischen Signalen in Ultraschall und einen Halter umfasst. In dem Halter ist wenigstens ein Ultraschallkanal ausgebildet, in dem der Ultraschallwandler wenigstens teilweise angeordnet ist und/ oder durch den Ultraschall von bzw. zu dem Ultraschallwandler gelangen kann. Der Halter weist wenigstens eine an wenigstens einen Abschnitt des Ultraschallkanals angrenzende, nicht-fasrige Oberflächenschicht auf, deren Impedanz kleiner ist als die einer zu der Oberflächenschicht benachbarten Innenschicht des Halters.

In WO 2008/009384 A1 ist ein Verfahren zur Beurteilung eines Zustands wenigstens eines Wertdokuments im Hinblick auf Lappigkeit beschrieben, bei dem aus Transmissionswerten, die die Ultraschalltransmission an verschiedenen Orten auf dem Wertdokument wiedergeben, ein Zustandswert ermittelt wird, der von einer Variation der Transmissionswerte abhängt und den Zustand des Wertdokuments im Hinblick auf Lappigkeit charakterisiert. Unter Verwendung eines vorgegebenen Kriteriums für den Zustandswert wird ein Zustand des Wertdokuments ermittelt.

DE 10 2005 045 566 A1 betrifft mehrlagiges Sicherheitspapier für die Herstellung von Sicherheits- oder Wertdokumenten, wie Banknoten, Ausweiskarten und dergleichen. In eine erste Papierlage ist ein endloses Sicherheitselement eingebracht, welches auf zumindest einer Seite der Papierlage frei zugänglich ist. Die erste Papierlage ist auf der frei zugänglichen Seite des Sicherheitselements von einer zweiten Papierlage abgedeckt, und die zweite Papierlage weist im Bereich des Sicherheitselements eine oder mehrere Öffnungen auf.

Der vorliegenden Erfindung liegt die Aufgabe zugrunde, die Anfertigung und/oder Benutzung von gefälschten Wertdokumenten zu erschweren.

Die Aufgabe wird gelöst durch ein Verfahren nach Anspruch 1 und insbesondere ein Verfahren zur Untersuchung eines blatt- oder kartenförmigen Wertdokuments eines vorgegebenen Typs mit einem Sicherheitsmerkmal, das einen oder mehrere in dem Wertdokument ausgebildete Hohlräume aufweist, dessen bzw. deren Weite in wenigstens einer jeweils vorgegebenen Richtung 10 µm übersteigt, bei dem ortsaufgelöst Transmissionswerte für die Transmission von Ultraschall in einem vorgegebenen Frequenzbereich ermittelt werden, und bei dem unter Verwendung der Transmissionswerte das Kriterium geprüft wird, ob eine vorgegebene Anzahl von Transmissionswerten kleiner als ein vorgegebener Transmissionsschwellwert ist, der einer Transmission entspricht, die kleiner als die Transmission wenigstens eines Referenzbereichs des Wertdokuments oder wenigstens eines Referenzwertdokuments, der den Hohlraum bzw. die Hohlräume nicht aufweist, wenigstens eines Referenzbereichs des Wertdokuments oder wenigstens eines Referenzwertdokuments ist, der den Hohlraum bzw. die Hohlräume nicht aufweist. In Abhängigkeit von dem Ergebnis der Prüfung wird dann vorzugsweise ein Signal gebildet, das einen Hinweis auf die Echtheit des Wertdokuments darstellt und/oder das einen Hinweis auf das Vorliegen einer Fälschung des Wertdokuments darstellt. Das Signal kann so gebildet werden, dass es einen Hinweis auf die Echtheit des Wertdokuments nur darstellt, wenn das Kriterium erfüllt ist, und/oder dass Hinweis auf das Vorliegen einer Fälschung immer darstellt, wenn das Kriterium nicht erfüllt ist. Das Signal kann insbesondere auch zur Speicherung eines entsprechenden Echtheitswertes in einem Speicher einer bei der Prüfung verwendeten Datenverarbeitungseinrichtung verwendet werden, der entsprechende Hinweise darstellt und im weiteren verwendet werden kann.

Das erfindungsgemäße Verfahren dient zur Untersuchung eines bestimmten Typs von Wertdokumenten, nämlich Wertdokumenten mit wenigstens einem Sicherheitsmerkmal, das einen Hohlraum oder mehrere Hohlräume aufweist. Weist das Sicherheitsmerkmal mehrerer Hohlräume auf, können diese gleiche oder verschiedene Form und Größe aufweisen. Der Hohlraum bzw. die Hohlräume weisen eine Ausdehnung in wenigstens einer für den Hohlraum bzw. den jeweiligen Hohlraum vorgegebenen Richtung von wenigstens 10 µm auf. Hohlräume im Sinne der Erfindung sind geschlossen.

Vorzugsweise beträgt die Ausdehnung des Hohlraums oder der Hohlräume in der oder einer anderen für den jeweiligen Hohlraum vorgegebenen Richtung parallel zu einer Fläche des Wertdokuments mehr als 100 µm.

Die Ausdehnung des Hohlraums oder der Hohlräume in einer Richtung senkrecht zu der Fläche des Wertdokuments ist vorzugsweise größer als 30% der Gesamtdicke des Wertdokuments im Bereich des Hohlraums bzw. der Hohlräume und/oder größer als 20 µm.

Vorzugsweise sind der Hohlraum oder wenigstens zwei der Hohlräume linienförmig ausgebildet. Die linienförmigen Hohlräume sind vorzugsweise mit einer Breite zwischen 0,05 mm und 1 mm ausgebildet. Der Mitte-zu-Mitte-Abstand von nächstbenachbarten linieförmigen Hohlräumen liegt mit Vorteil zwischen 0,05 mm und 1 mm, insbesondere zwischen 0,3 mm und 0,7 mm, wobei der Mitte-zu-Mitte-Abstand konstant (äquidistante Hohlräume) oder variabel (divergierende Hohlräume) sein kann.

Um eine besonders gute Erkennung des Sicherheitsmerkmals bei der Untersuchung mit Ultraschall zu ermöglichen, ist der Anteil einer Fläche, die eine orthogonale Projektion des Hohlraums bzw. der Hohlräume auf die Fläche des Wertdokuments, darstellt, an der Fläche des Sicherheitsmerkmals größer als 10 %, vorzugsweise als 30%. Unter der Fläche des Sicherheitsmerkmals wird dabei die Fläche des kleinsten Bereichs der Fläche des Wertdokuments verstanden, der durch wenigstens eine geschlossene Kurve gebildet wird und in dem die Projektion des Hohlraums bzw. die Projektionen der Hohlräume liegen. Diese kleinste Fläche ist vorzugsweise größer als 5 mm².

Die genannten Dimensionen und Formen erlauben zum einen eine gute Erkennung des Sicherheitsmerkmals mit Ultraschall und zum anderen eine einfache Herstellung.

Der Hohlraum bzw. die Hohlräume können prinzipiell auf beliebige Art und Weise hergestellt sein. Vorzugsweise umfaßt das Wertdokument ein Substrat, das für den Hohlraum oder jeden der Hohlräume eine teilweise oder besonders bevorzugt, vollständige Durchbrechung aufweist, die beidseitig durch an dem Substrat gehaltene Deckschichten abgedeckt ist, so dass die abgedeckte Durchbrechung den Hohlraum bilden. Dies ermöglicht eine besonders einfache Herstellung des Sicherheitsmerkmals bzw. Wertdokuments. Beispielsweise kann das Substrat wenigstens eine Schicht aus Banknotenpapier/oder einer polymeren Folie und die Deckschichten können eine polymere Folie bzw. einen polymeren Film umfassen. Alternativ kann das Substrat beispielsweise aus wenigstens einem polymeren Material bzw. Kunststoff gebildet sein, und die Deckschichten können aus Papier gefertigt sein. Das Banknotenpapier bzw. Papier kann aus Natur- und/oder Synthesefasern hergestellt sein bzw. Natur- und/oder Synthesefasern enthalten.

Die Durchbrechungen können in einem Motivbereich des Wertdokuments angeordnet sein, der vorzugsweise einen im Auflicht und/oder Durchlicht veränderten visuellen Eindruck aufweist und/oder in Form eines Musters, von Zeichen oder einer Codierung ausgebildet ist. Unter einem im Auflicht und/oder Durchlicht veränderten visuellen Eindruck wird dabei verstanden, dass der visuelle Eindruck bei Betrachtung im Auflicht gegenüber dem bei Betrachtung im Durchlicht verändert ist. Dies ermöglicht eine einfach visuelle Prüfung des Sicherheitsmerkmals mit bloßem Auge.

Besonders bevorzugt können die Durchbrechungen linienförmig ausgebildet sein und vorzugsweise eine Breite zwischen 0,05 mm und 1 mm aufweisen. Dies ermöglicht insbesondere eine einfache Herstellung der Hohlräume.

In einer bevorzugten Ausgestaltung weist der Motivbereich teilweise Durchbrechungen, d. h. Vertiefungen, auf und diese teilweisen Durchbrechungen sind durch eine Vielzahl von Verdünnungslinien im Substrat gebildet. Diese ergeben dann linienförmige Hohlräume. Im Bereich der teilweisen Durchbrechungen zeigt der Motivbereich dann ein wasserzeichenähnliches Erscheinungsbild, bei dem das dargestellte Motiv im Auflicht, also in reflektiertem Licht, kaum zu erkennen ist, während es im Durchlicht, also in transmittiertem Licht, wegen der höheren Lichtdurchlässigkeit der teilweise durchbrochenen Bereiche deutlich in Erscheinung tritt.

Bei einer Schichtdicke SD des Substrates können die teilweisen Durchbrechungen eine Tiefe Ti gemäß folgender Beziehung aufweisen: 0 < Ti < SD. D. h., die Tiefe Ti der teilweisen Durchbrechungen kann einen Wert erreichen, der nur geringfügig kleiner als die Schichtdicke SD des Substrates ist.

Sind die Durchbrechungen nicht taktil erfaßbar, kann, je nach optischer Gestaltung, das Sicherheitsmerkmal nur maschinell prüfbar sein. Vorzugsweise sind die Durchbrechungen jedoch taktil erfaßbar. Um die Taktilität des Motivbereichs sicherzustellen, weisen die teilweisen Durchbrechungen eine Tiefe von ca. 10 µm oder mehr auf. Es versteht sich, dass die Taktilität des Materials nicht nur von der Tiefe T der (teilweisen) Durchbrechungen abhängt, sondern z.B. auch von der Breite B der (teilweisen) Durchbrechungen. Es hat sich in der Praxis gezeigt, dass die Taktilität des Motivbereichs bei einer Tiefe von ca. 10 µm oder mehr und einer Breite von ca. 100 µm oder mehr sichergestellt ist.

Alternativ oder zusätzlich kann der Motivbereich vollständige Durchbrechungen aufweisen und besonders bevorzugt sind diese vollständigen Durchbrechungen durch eine Vielzahl von Schnittlinien im Substrat gebildet Im Bereich der vollständigen Durchbrechungen stellt der Motivbereich dann einen Durchsichtsbereich im Wertdokument dar, der sowohl bei Betrachtung in Aufsicht als auch in Durchsicht zu erkennen ist. Durch Schnittlinien gebildete Durchbrechungen bilden insbesondere linienförmige Hohlräume. Der Motivbereich hat vorzugsweise eine Fläche von wenigstens 4 mm². Dies erlaubt eine sichere Detektion mit Ultraschall in dem bevorzugten Frequenzbereich.

In allen Gestaltungen sind die Schnittlinien bzw. Verdünnungslinien vorzugsweise mit einer Breite zwischen 0,05 mm und 1 mm ausgebildet. Der Mitte-zu-Mitte-Abstand liegt mit Vorteil zwischen 0,05 mm und 1 mm, insbesondere zwischen 0,3 mm und 0,7 mm, wobei der Mitte-zu-Mitte-Abstand konstant (äquidistante Schnittlinien bzw. Verdünnungslinien) oder variabel (divergierende Schnittlinien bzw. Verdünnungslinien) sein kann.

Das Substrat des Wertdokuments kann durch eine Kunststofffolie, insbesondere eine opake Kunststofffolie aus PET, PP, PE, PA, PC (Polycarbonat) oder PVC gebildet sein. Sofern das Substrat nicht opak im Sinne der weiter unten gegebenen Definition ist, kann es mit Vorteil einen Transmissionsgrad kleiner als 10 % aufweisen oder sogar intransparent ausgebildet sein. Die Schichtdicke der (opaken) Kunststofffolie liegt typischerweise zwischen 4 µm und 100 µm und insbesondere bei etwa 50 µm. Es versteht sich, dass die Schichtdicke des Substrats insbesondere in Abhängigkeit von der Art des verwendeten Folienmaterials und des Schichtaufbaus der Polymer-Banknote gewählt wird.

Die polymeren Deckschichten sind mit Vorteil transparent oder transluzent ausgebildet. Um die Taktilität des Motivbereichs möglichst weitgehend zu erhalten, sind die polymeren Deckschichten sehr dünn, vorzugsweise mit einer Dicke von 12 µm oder weniger, und insbesondere mit einer Dicke von etwa 6 µm oder weniger ausgebildet. Z.B. kann eine polymere Deckschicht eine Dicke von nur ca. 4,5 µm aufweisen, wodurch die Taktilität des Motivbereichs sehr gut erhalten wird.

Eine polymere Deckschicht wird vorzugsweise durch eine Kunststofffolie, insbesondere aus PET, PP, PE, PA, PC oder PVC gebildet, wobei gegenwärtig eine Kunststofffolie aus PET besonders bevorzugt ist.

Auf zumindest einer der polymeren Deckschichten ist mit Vorteil eine bereichsweise oder vollflächig angeordnete Farbannahmeschicht vorgesehen, die der weiteren drucktechnischen Ausgestaltung des Wertdokuments dient. Die Farbannahmeschicht ist mit Vorteil opak ausgestaltet. Einer solchen opaken Farbannahmeschicht kann ein dritter optischer Transmissionsgrad zugeordnet werden, während dem Substrat ein erster optischer Transmissionsgrad und dem Bereich der Durchbrechungen im Substrat ein zweiter optischer Transmissionsgrad zugeordnet werden kann, welcher größer als der erste optische Transmissionsgrad ist. Sofern der dritte optische Transmissionsgrad kleiner als der zweite optische Transmissionsgrad ist, ergibt sich bei Betrachtung des Motivbereichs des Wertdokuments ein in Auflicht und/oder Durchlicht veränderter visueller Eindruck.

Im Sinne der vorliegenden Anmeldung bezeichnet der optische Transmissionsgrad die Durchlässigkeit für Licht, insbesondere für Licht im sichtbaren Wellenlängenbereich zwischen 400 nm und 800 nm, d.h. für Licht wie es üblicherweise vom Betrachter wahrgenommen wird. Je nach Anwendung kann sich der optische Transmissionsgrad jedoch auch nur auf eine einzige Wellenlänge oder auf andere Wellenlängenbereiche beziehen, beispielsweise auf den an den sichtbaren Spektralbereich sich anschließenden nahen UV- oder IR-Wellenlängenbereich. Eine intransparente Schicht weist idealerweise einen optischen Transmissionsgrad von 0 % auf, wobei dieser Wert in der Praxis in der Regel nicht exakt erreicht wird. Ein transparente Schicht weist idealerweise einen optischen Transmissionsgrad von 100 % auf, wobei dieser Wert in der Praxis in der Regel nicht exakt erreicht wird.

Im Rahmen der vorliegenden Anmeldung weist eine transluzente Schicht vorzugsweise einen solchen optischen Transmissionsgrad auf, dass ein Betrachter eine transluzente Schicht eindeutig von einer intransparenten und einer transparenten Schicht unterscheiden kann. Entsprechend weist eine transluzente Schicht einen optischen Transmissionsgrad auf, der sich ausreichend deutlich von den optischen Transmissionsgraden einer intransparenten und einer transparenten Schicht unterscheidet Im Rahmen der vorliegenden Anmeldung weist eine transluzente Schicht daher bevorzugt einen optischen Transmissionsgrad von 10 % bis 90 %, und besonders bevorzugt von 20 % bis 80 % auf. Bezieht sich der optische Transmissionsgrad nicht nur auf eine einzelne Wellenlänge, sondern auf einen Wellenlängenbereich, beispielsweise den sichtbaren Spektralbereich, so beschreibt der optische Transmissionsgrad den über den jeweiligen Wellenlängenbereich gemittelten optischen Transmissionsgrad der verschiedenen in dem Wellenlängenbereich liegenden Wellenlängen. Vorzugsweise nimmt der optische Transmissionsgrad in einem Wellenlängenbereich für jede Wellenlänge des Wellenlängenbereichs den gleichen Wert an. Der optische Transmissionsgrad einer Schicht beschreibt das Verhältnis von durchgelassenem Licht zum einfallenden Licht bei Durchtritt durch die Schicht, beispielsweise in Normalenrichtung der Schicht.

Eine opake Schicht, insbesondere eine opake Farbannahmeschicht im Sinne der vorliegenden Anmeldung ist eine Schicht, die bei Betrachtung im Auflicht, in Betrachtungsrichtung hinter der Schicht liegende Strukturen, beispielsweise weitere Schichten, zumindest im Wesentlichen, im Idealfall vollständig verdeckt, so dass diese weiter hinten liegenden Strukturen von einem Betrachter nicht mehr wahrgenommen werden. Mit anderen Worten bezieht sich der Begriff "opak" in erster Linie auf eine Betrachtung im Auflicht, wobei sich diese optischen Eigenschaft wiederum auf die relevante Wellenlänge oder den relevanten Wellenlängenbereich bezieht. Der relevante Wellenlängenbereich ist typischerweise der sichtbare Spektralbereich zwischen 400 nm und 800 nm, kann sich jedoch alternativ oder zusätzlich auch auf die angrenzenden Wellenlängenbereiche im nahen UV- oder IR-Bereich beziehen.

Weiter braucht eine opake Schicht nicht notwendigerweise intransparent zu sein, sondern kann einen optischen Transmissionsgrad größer als 0 % aufweisen. Eine opake Schicht, insbesondere eine opake Farbannahmeschicht auf zumindest einer der polymeren Deckschichten des Wertdokuments, weist derartige Eigenschaften auf. Dazu werden das Material, die Schichtdicke und sonstige Eigenschaften der opaken Schicht, insbesondere der opaken Farbannahmeschicht geeignet gewählt. Demzufolge ist die opake Farbannahmeschicht vorzugsweise eine Schicht, die die physikalische Trocknung bzw. die Filmbildung von ölbasierenden Druckfarben und/oder von wässrigen und/oder organische Lösungsmittel enthaltenden und/oder kationisch bzw. radikalisch härtenden Druckfarben ermöglicht. Die opake Farbannahmeschicht kann auf wässriger Basis und/oder auf Basis von organischen Lösungsmitteln hergestellt werden. Die opake Farbannahmeschicht kann ferner als eine einzelne Schicht vorliegen oder in Form von mehreren Einzelschichten gebildet sein, die sich mit Bezug auf die gegenständliche Beschaffenheit unterscheiden können. Die gesamte Schichtdicke der opaken Farbannahmeschicht kann vorzugsweise in einem Bereich von 2 µm bis 15 µm liegen. Die opake Farbannahmeschicht enthält vorzugsweise selbstvernetzende Harze und/oder mindestens zwei miteinander zu vernetzende Komponenten. Die erste Komponente kann bevorzugt von Alkoxysilanen, Isocyanaten, Diimiden, Aziridinen und Glycidethern gewählt sein. Die zweite Komponente kann bevorzugt von Polyurethanen, Urethanacrylaten, Polyestern, Polyethern, Polyvinylalkoholen, Maleinaten, Acrylaten und Copolymeren hiervon gewählt sein. Weiter kann die opake Schicht im Besonderen Füllstoffe, wie etwa Kieselgele, Metalloxide, Metallhydroxide; metalloxidische Hydrate, Salze anorganischer Säuren enthalten. Bei ausreichend geringer Schichtdicke erscheint die opake Farbannahmeschicht im Durchlicht milchig oder trüb.

Selbstverständlich kann das Wertdokument auch weitere Schichten, wie etwa Schutzschichten oder mit anderen Sicherheitselementen versehene Funktionsschichten aufweisen. Zweckmäßig sind die polymeren Deckschichten jeweils über eine Kaschierkleberschicht mit dem Substrat verbunden.

In einer vorteilhaften Ausgestaltung weist der Motivbereich in seinem Inneren zumindest einen Bereich ohne Durchbrechungen des Substrats auf, der in Form eines Musters, von Zeichen oder einer Codierung ausgebildet ist.

Ein solches Wertdokument kann beispielsweise hergestellt werden, indem ein Substrat aus Banknotenpapier und/ oder einem polymeren Material bereitgestellt, in dem Substrat ein Motivbereich gebildet wird, in dem taktil erfassbare, teilweise oder vollständige Durchbrechungen in Form eines Musters, von Zeichen oder einer Codierung in das Substrat eingebracht werden, wodurch der Motivbereich mit dem im Auflicht und/oder Durchlicht veränderten visuellen Eindruck erzeugt wird, und das Substrat zumindest im Motivbereich beidseitig jeweils von einer Deckschicht, vorzugsweise einer polymeren Deckschicht, abgedeckt wird.

Die Durchbrechungen können beispielsweise mit einer Stanze erzeugt werden, wegen der höheren räumlichen Auflösung ist jedoch die Erzeugung durch Laserbeaufschlagung, insbesondere mittels eines CO2-Lasers, bevorzugt.

Die polymeren Deckschichten werden vorteilhaft zumindest im Motivbereich auf das Substrat aufkaschiert, wobei dies vorzugsweise nach der Erzeugung der teilweisen oder vollständigen Durchbrechungen vorgenommen wird.

Bei dem Verfahren wird zur Prüfung des Sicherheitsmerkmals vorzugsweise Ultraschall verwendet, der eine Frequenz im Bereich von 50 kHz bis 800 kHz aufweist. Weiter ist es bevorzugt, dass zur Ermittlung der Transmissionswerte Ultraschallpulse verwendet werden. In diesem Fall wird unter der Frequenz des Ultraschalls der arithmetische Mittelwert über die Frequenzen des Pulses verstanden.

Unter Transmissionswerten werden im Rahmen der vorliegenden Erfindung, soweit auf Ultraschall Bezug genommen wird, Transmissionswerte für Ultraschall in dem vorgegebenen Frequenzbereich verstanden, soweit nicht ausdrücklich etwas anderes beschrieben ist.

Insbesondere ist bei dem Verfahren vorzugsweise eine Ausdehnung des Hohlraums bzw. der Hohlräume jeweils in einer vorgegebenen Richtung parallel zu einer Fläche des Wertdokuments kleiner als eine Wellenlänge des Ultraschalls in Luft.

Zur Ermittlung der Ultraschalltransmissionswerte kann ein ortsauflösender Ultraschalltransmissionssensor verwendet werden, der zur Verwendung in dem vorgegebenen Frequenzbereich ausgebildet ist. Dieser kann vorzugsweise sich gegenüberliegende Ultraschallsender und -empfänger aufweisen, zwischen den das Wertdokument zur Erfassung der Transmissionswert mittels einer Transporteinrichtung hindurchtransportiert wird, wobei während des Hindurchtransports die Transmissionswerte erfaßt werden. Die zwischen den Ultraschallsendern und Ultraschallempfängern jeweils gebildeten Ultraschallstrecken können gegenüber einer Transportebene, in der die Wertdokumente durch den Ultraschalltransmissionssensor transportiert werden, geneigt oder vorzugsweise im wesentlichen orthogonal ausgerichtet sein.

Bei der Prüfung werden die Transmissionswerte daraufhin überprüft, ob eine vorgegebene Anzahl von diesen den Transmissionsschwellwert unterschreiten. Der Transmissionsschwellwert ist dabei so gewählt, dass er einer Transmission entspricht, die in vorgegebener Weise kleiner als die Transmission wenigstens eines Referenzbereichs ist, der keinen Hohlraum aufweist. Der Referenzbereich, der für den vorgegebenen Typ von Wertdokument vorgegeben sein kann, kann ein Referenzbereich des aktuell geprüften Wertdokuments oder von Referenzdokumenten des vorgegebenen Typs sein. Unter der Transmission eines Referenzbereichs wird dabei die mittlere Transmission des Referenzbereichs, vorzugsweise ein arithmetischer Mittelwert verstanden. Die vorgegebene Anzahl wird vorzugsweise in Abhängigkeit von der Ausdehnung des Sicherheitsmerkmals bzw. dem Wertdokumenttyp und der örtlichen Auflösung des Ultraschallsensors bzw. der Transmissionsmessung gewählt. Vorzugsweise ist die Anzahl größer als 1.

Die Prüfung kann mittels einer elektronischen Schaltung oder vorzugsweise einer Datenverarbeitungseinrichtung, die beispielsweise einen FPGA und/oder einen Mikrocontroller und/oder einen Prozessor aufweisen kann, erfolgen. Die Prüfung kann durch unmittelbaren Vergleich des jeweiligen Transmissionswerts mit dem Transmissionsschwellwert, durch Vergleich eines Werts einer im relevanten Wertebereich monotonen, vorzugweise streng monotonen Funktion des Transmissionswertes für den jeweiligen Transmissionswert mit dem einem Schwellwert, der dem Wert der Funktion für den Transmissionsschwellwert entspricht, oder auf andere indirekte Weise erfolgen. Im zweiten Fall braucht der Transmissionsschwellwert nicht unbedingt selbst vorgegeben zu sein, vielmehr kann die Angabe des Schwellwerts genügen. Die Funktion braucht nicht monoton steigend zu sein, sie kann auch monoton fallend sein. In letzterem Fall wird dann geprüft, ob der Funktionswert für den jeweiligen Transmissionswert kleiner als der Schwellwert ist.

Der Transmissionsschwellwert kann prinzipiell in beliebiger Art und Weise vorgegeben sein. Er braucht nicht unbedingt der genannten Transmission der Referenzbereiche genau zu entsprechen, sondern kann beispielsweise auch kleiner gewählt, beispielsweise zwischen 1 und 20% kleiner, sein.

So kann der Transmissionsschwellwert unter Verwendung der für das geprüfte Wertdokument ermittelten Transmissionswerte ermittelt werden. Vorzugsweise werden dabei Transmissionswerte für den Referenzbereich des Wertdokuments ermittelt, in dem keine Hohlräume zu erwarten sind.

Als Transmissionsschwellwert kann beispielsweise ein Mittelwert, insbesondere arithmetischer Mittelwert, solcher Transmissionswerte verwendet werden.

Es ist aber beispielsweise auch möglich, dass der erste Transmissionsreferenzwert durch Untersuchungen von Referenzwertdokumenten gleichen Typs ermittelt wurde. Unter Referenzwertdokumente gleichen Typs werden im Fall von Banknoten echte Wertdokumente gleicher Währung und Stückelung verstanden, die das Sicherheitsmerkmal aufweisen. Dies erlaubt eine besonders sichere Ermittlung eines geeigneten Transmissionsschwellwerts.

Eine besonders sichere Prüfung ergibt sich, wenn bei dem Verfahren bei der Prüfung des Kriteriums ermittelt wird, ob der jeweilige Transmissionswert innerhalb eines Intervalls liegt, dessen obere Grenze der Transmissionsschwellwert ist. Die untere Grenze wird vorzugsweise in Abhängigkeit von Transmissionswerten gewählt, die sich bei Erfassung sich überlappender Abschnitte von zwei übereinanderliegenden, aber nicht zusammengeklebten Wertdokumenten des vorgegebenen Typs ergeben. Vorzugsweise wird die untere Grenze nicht kleiner als ein Doppelabzugsschwellwert für die Transmissionswerte gewählt, der zur Erkennung von wenigstens teilweise übereinander liegend transportierten Wertdokumenten des vorgegebenen Typs mittels des Ultraschalltransmissionssensors verwendet wird. Vorzugsweise liegt die Grenze wenigstens 5% über dem Doppelabzugsschwellwert.

Prinzipiell kann bei dem Verfahren das gesamte Wertdokument für die Prüfung herangezogen werden. Es ist jedoch auch möglich, dass bei dem Verfahren bei der Prüfung nur Transmissionswerte für einen vorgegebenen Bereich des Wertdokuments verwendet werden. Der Bereich kann insbesondere in Abhängigkeit von dem Typ des Wertdokuments vorgegeben sein. Beispielsweise kann es sich um einen Bereich handeln, in dem bei einem echten Wertdokument des vorgegebenen Typs Hohlräume zu finden sein müssen.

Prinzipiell genügt es bei dem Verfahren, dass bei der Prüfung nur das Vorhandensein der vorgegebenen Anzahl von Transmissionswerten geprüft wird. Es ist jedoch auch möglich, dass bei dem Verfahren bei der Prüfung zusätzlich auch die Verteilung der Transmissionswerte in dem vorgegebenen Bereich und/oder derjenigen Transmissionswerte in dem vorgegebenen Bereich, die kleiner als der Transmissionsschwellwert sind, berücksichtigt wird. Die Prüfung kann dann nur dann als erfolgreich eingestuft werden, wenn die Verteilung einem vorgegebenen Verteilungskriterium genügt Das Kriterium bezüglich der Anzahl muß dann zusätzlich erfüllt sein. Insbesondere kann das Verteilungskriterium ein Kriterium für das Vorliegen eines vorgegebenen Musters von Transmissionseigenschaften oder -werten bzw. erfassbaren Hohlräumen sein.

Je nach Lage und Form der Hohlräume kann bei dem Verfahren zusätzlich das weitere Kriterium geprüft werden, ob die Orte, die der vorgegebenen Anzahl von Transmissionswerten bzw. den Transmissionswerten, die den Transmissionsschwellwert unterschreiten, entsprechen, ein zusammenhängendes Gebilde bilden. Vorzugsweise wird das Signal dann so gebildet, dass es einen Hinweis auf die Echtheit des Wertdokuments nur dann darstellt, wenn das weitere Kriterium erfüllt ist, bzw. dass es einen Hinweis auf das Vorliegen einer Fälschung immer dann darstellt, wenn das weitere Kriterium nicht erfüllt ist.

Gegenstand der Erfindung ist auch eine Vorrichtung zur Untersuchung eines blatt- oder kartenförmigen Wertdokuments mit einem Sicherheitsmerkmal, das einen oder mehrere in dem Wertdokument ausgebildete Hohlräume aufweist, dessen bzw. deren Weite in wenigstens einer jeweils vorgegebenen Richtung 10 µm übersteigt, die einen Ultraschalltransmissionssensor zu Erfassung ortsaufgelöster Transmissionswerte für die Transmission von Ultraschall in einem vorgegebenen Frequenzbereich durch das Wertdokument, und einer mit dem Ultraschalltransmissionssensor über eine Signalverbindung verbundene Steuer- und Auswerteinrichtung, die zur Durchführung des erfindungsgemäßen Verfahrens ausgebildet ist. Vorzugsweise umfaßt die Vorrichtung weiter eine Transporteinrichtung zum Transportieren des Wertdokuments durch den Ultraschalltransmissionssensor, wobei die Vorrichtung so ausgebildet ist, dass die Transmissionswerte während des Transports des Wertdokuments durch den Ultraschalltransmissionssensor erfaßt werden. Die Steuer- und Auswerteeinrichtung kann insbesondere eine Datenverarbeitungseinrichtung, die beispielsweise einen FPGA und/oder einen Mikrocontroller und/ oder einen Prozessor und einen Speicher mit einem darin gespeicherten Datenverarbeitungsprogramm aufweisen, die, wie oben erwähnt, insbesondere die Prüfung durchführt.

Die Erfindung wird im Folgenden noch weiter beispielhaft an Hand der Zeichnungen erläutert. Es zeigen:
- Fig. 1: eine schematische Darstellung einer Polymer-Banknote mit einem Motivbereich,
- Fig. 2: einen Querschnitt durch die Polymer-Banknote der Fig. 1 entlang der Linie II-II,
- Fig. 3: eine Detailaufsicht auf den Durchsichtsbereich der Banknote der Fig. 1,
- Fig. 4: für eine Polymer-Banknote nach einem anderen Ausführungsbeispiel einen Querschnitt nur durch das Polymer-Substrat im Motivbereich,
- Fig. 5: das visuelle Erscheinungsbild des Motivbereichs der fertigen Polymer-Banknote der Fig. 4,
- Fig. 6: für eine Polymer-Banknote nach einem weiteren Ausführungsbeispiel der Erfindung einen Querschnitt nur durch das Polymer-Substrat im Motivbereich,
- Fig. 7: für eine Polymer-Banknote nach noch einem weiteren Ausführungsbeispiel, in (a) einen Querschnitt nur des Polymersubstrats, in (b) den visuellen Eindruck des Motivbereichs in Aufsicht und in (c) den visuellen Eindruck des Motivbereichs in Durchsicht,
- Fig. 8 und 9: das visuelle Erscheinungsbild des Motivbereichs fertiger Polymer-Banknoten nach weiteren Ausführungsbeispielen,
- Fig. 10: eine schematische Darstellung einer Banknotenbearbeitungsvorrichtung,
- Fig. 11: eine schematische Darstellung eines Ultraschallsensors der Banknotenbearbeitungsvorrichtung in Fig. 10 mit einer Steuer- und Auswerteeinrichtung in einer Ansicht entlang einer Transportrichtung von Wertdokumenten,
- Fig. 12: eine schematische Darstellung von Ultraschallsendern des Ultraschallsensors in Fig. 11 in einer Ebene parallel zur Ebene einem zu untersuchenden Wertdokument,
- Fig. 13: eine schematische teilweise Darstellung eines Wertdokuments mit durch die Ultraschallsender des Ultraschallsensors in Fig. 11 beschallten Flecken bzw. Abtastbereichen,
- Fig. 14: eine schematische Darstellung eines Wertdokuments mit Orten bzw. Abtastbereichen, für die 'Transmissionswerte mittels des Ultraschallsensors in Fig. 12 ermittelt wurden,
- Fig. 15: ein vereinfachtes Ablaufdiagramm für ein Verfahren zur Untersuchung eines blatt- oder kartenförmigen Wertdokuments mittels des Ultraschallsensors und der Steuer- und Auswerteeinrichtung in Fig. 11 nach einer bevorzugten Ausführungsform der Erfindung, und

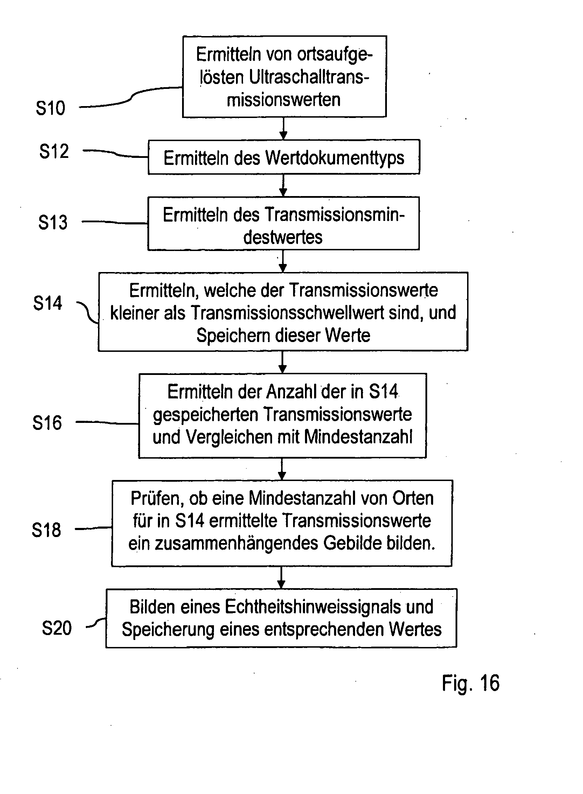

- Fig.16: ein vereinfachtes Ablaufdiagramm für ein Verfahren zur Untersuchung eines blatt- oder kartenförmigen Wertdokuments mittels des Ultraschallsensors und der Steuer- und Auswerteeinrichtung in Fig. 11 nach einer weiteren bevorzugten Ausführungsform der Erfindung, und

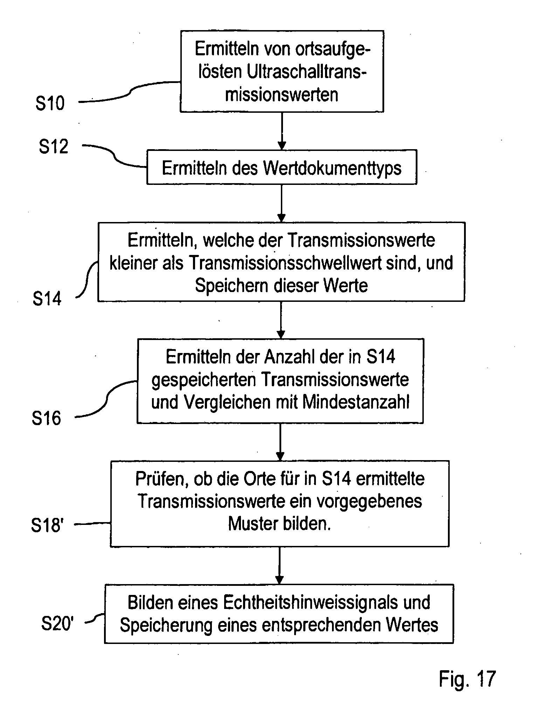

- Fig. 17: ein vereinfachtes Ablaufdiagramm für ein Verfahren zur Untersuchung eines blatt- oder kartenförmigen Wertdokuments mittels des Ultraschallsensors und der Steuer- und Auswerteeinrichtung in Fig. 11 nach einer weiteren bevorzugten Ausführungsform der Erfindung.

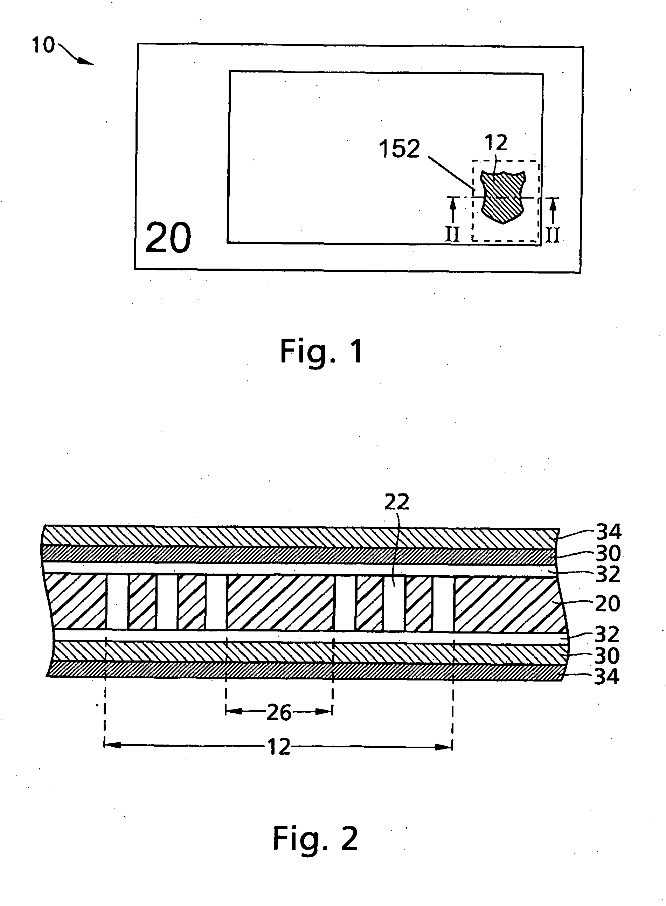

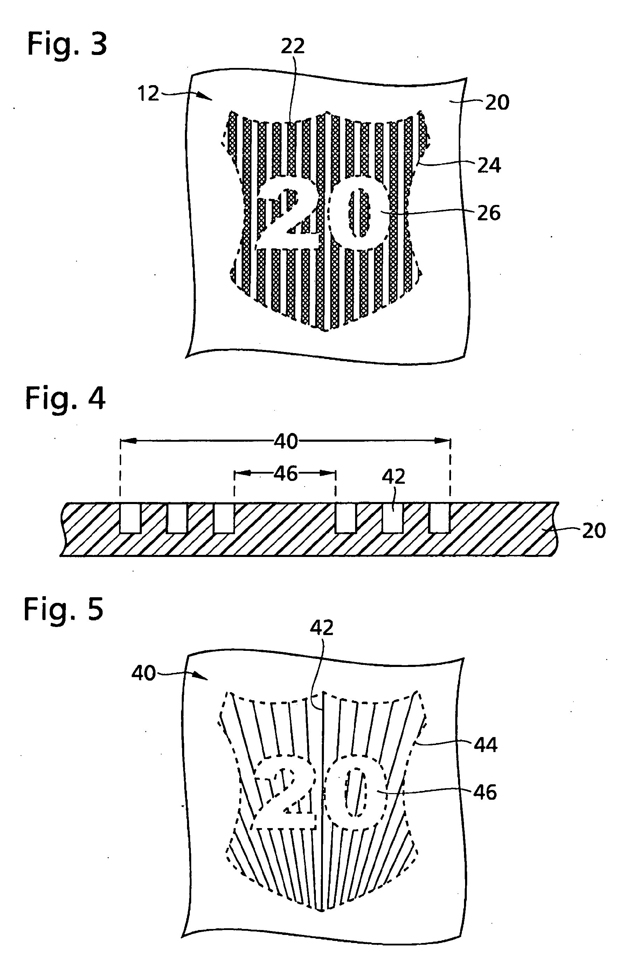

Die Erfindung wird nun am Beispiel von Wertdokumenten in Form von Polymer-Banknoten erläutert. Die Figuren 1 und 2 zeigen dazu eine schematische Darstellung einer Polymer-Banknote 10, die einen erfindungsgemäßen Motivbereich in Gestalt eines Durchsichtsbereichs 12 aufweist. Der Durchsichtsbereich 12 der Polymer-Banknote 10 ist in Fig. 2 im Querschnitt entlang der Linie II-II und in Fig. 3 in einer Detailaufsicht genauer gezeigt.

Mit Bezug auf die Figuren 2 und 3 weist die Banknote 10 ein Substrat 20 in Form einer opaken oder sogar intransparenten, 50 µm dicken PET-Folie auf. Durch Beaufschlagung mit der Strahlung eines CO₂-Lasers ist in das opake oder sogar intransparente Polymersubstrat 20 ein Linienraster eingebracht, das aus einer Vielzahl paralleler, durchgehender Schnittlinien 22 gebildet ist. Der besseren Erkennbarkeit halber sind die ausgeschnittenen Bereiche des Polymersubstrats 20 im Querschnitt der Fig. 2 ungefüllt dargestellt, während die ausgeschnittenen Linien 22 in der Aufsicht der Fig. 3 schraffiert eingezeichnet sind.

Das Linienraster der Schnittlinien 22 weist im gezeigten Ausführungsbeispiel eine Periodenlänge von 0,75 mm bei einer Schnittbreite der Schnittlinien von 0,25 mm auf. Die Flächendeckung des Linienrasters beträgt damit 33%, so dass der Durchsichtsbereich 12 bei Betrachtung sowohl in Aufsicht als auch in Durchsicht zu erkennen ist.

Wie am besten in Fig. 3 zu erkennen, sind die Schnittlinien 22 so angeordnet, dass das Linienraster ein Motiv in Form eines Musters, von Zeichen oder einer Codierung bildet. Im gezeigten Ausführungsbeispiel bildet der Durchsichtsbereich 12 mit seinem äußeren Umriss 24 ein Wappen, das in seinem Inneren einen ungeschnittenen Bereich 26 in Form der Denomination "20" der Polymer-Banknote 10 enthält. Die in der Figur gestrichelt eingezeichneten Umrisse des Wappens 24 und der Denomination 26 dienen dabei lediglich der zeichnerischen Veranschaulichung der gebildeten Form und entsprechen nicht notwendigerweise einer tatsächlich vorhandenen Kontur auf der Banknote.

Zurückkommend auf die Darstellung der Fig. 2 ist auf den beiden gegenüberliegenden Seiten des Durchsichtsbereichs 12 mittels zweier Kaschierkleberschichten 32 jeweils eine lediglich 6 µm dicke, transparente, transluzente, polymere Deckschicht 30 aufkaschiert Die Durchbrechungen bzw. Schnittlinien 22 bilden daher geschlossene, linienförmige Hohlräume. Auf diesen Deckschichten 30 sind Farbannahmeschichten 34, insbesondere opake Farbannahmeschichten für die weitere drucktechnische Ausgestaltung der Polymer-Banknote 10 angeordnet. Die Farbannahmeschichten 34 sind im gezeigten Ausführungsbeispiel vollflächig auf den Deckschichten 30 angeordnet. Grundsätzlich ist allerdings auch denkbar, dass eine Farbannahmeschicht nur bereichsweise auf der Deckschicht vorgesehen ist und z.B. im gesamten oder in Teilbereichen des Durchsichtsbereichs 12 keine Farbannahmeschicht 34 vorgesehen ist.

Visuell zeigt der Durchsichtsbereich 12 als Motiv ein Wappen 24 mit Denomination 26, und zwar mit einem im Auflicht und Durchlicht veränderten Erscheinungsbild. Zusätzlich verleiht das aus den Schnittlinien 22 gebildete Linienraster dem Motivbereich eine taktile Erfassbarkeit, da die Vertiefungen der Schnittlinien 22 beim Berühren der Banknoten mit den Fingern leicht erfühlt werden können. Die Deckschichten 30 schützen dabei das Linienraster vor äußeren Einflüssen, insbesondere vor Verschmutzung, erhalten jedoch aufgrund ihrer geringen Schichtdicke die Taktilität des Motivbereichs 12. Auch bilden die polymeren Abdeckschichten auf beiden Seiten der Durchbrechungen eine geeignete durchgehende Oberfläche für die Anordnung weiterer Schichten, insbesondere einer Farbannahmeschicht. Dabei wird aufgrund der in der Regel vorhandenen elastischen Eigenschaften der polymeren Abdeckschichten sichergestellt, dass die Durchbrechungen insbesondere dann mit den Fingern erfühlt werden können, wenn die Tiefe ca. 10 µm oder mehr und die Breite ca. 100 µm oder mehr beträgt.

Diese taktile Erfassbarkeit des Motivbereichs 12 stellt damit neben der visuellen Prüfbarkeit ein weiteres, auch für einen Laien leicht verifizierbares Echtheitsmerkmal dar, das mit einem Kopiergerät nicht nachzuahmen ist und so einen hochwertigen Schutz gegen Fälschungen bietet.

Die visuelle Überprüfbarkeit eines Wertdokuments gemäß Fig. 2 kann auch anhand der für die jeweiligen Schichten bzw. Bereiche gegebenen optischen Transmissionsgrade verstanden werden. Dies soll anhand einer Fig. 2 entsprechenden Variante erläutert werden. Bei der Variante sind auf ein intransparentes Substrat 20 beidseitig vollflächige, transparente, polymere Deckschichten 30 aufkaschiert, welche jeweils mit vollflächigen, opaken Farbannahmeschichten 34 versehen sind. Das intransparente Substrat 20 ist abgesehen von Schnittlinien 22 ebenfalls vollflächig ausgebildet. Die Schnittlinien 22 stellen durchgehende Ausnehmungen in dem intransparenten Substrat 20 dar. Bei Betrachtung des Wertdokuments im Auflicht ist somit von beiden Seiten her lediglich die jeweils in Betrachtungsrichtung vorne liegende opake Farbannahmeschicht 34 zu erkennen. Die dahinter liegenden Schnittlinien 22 der intransparenten Folie sind dagegen im Auflicht nicht zu erkennen. Bei Betrachtung im Durchlicht kann ein Betrachter wegen den von Null verschiedenen Transmissionsgraden der opaken Farbannahmeschichten 34 die Durchbrechungen in dem opaken Substrat 20, d.h. die Schnittlinien 22 erkennen. Somit ergibt sich ein verdecktes Sicherheitsmerkmal. Weisen die Schnittlinien 22, wie in Fig. 2 schematisch dargestellt, eine geringere Breite als die Schichtdicke des intransparenten Substrats 5 auf, so können die Schnittlinien 22 nur im Durchlicht bei im Wesentlichen senkrechter Betrachtung wahrgenommen werden, was ein weiteres Sicherheitsmerkmal darstellt. Es versteht sich, dass ein gemäß obiger Beschreibung erläuterter Gegenstand auch dann einen im Auflicht und/oder Durchlicht veränderten visuellen Eindruck für den Betrachter aufweist, wenn an Stelle des intransparenten Substrats 20 lediglich ein opakes Substrat, d.h. ein Substrat mit einem optischen Transmissionsgrad größer Null, oder sogar nur ein transluzentes Substrat, d.h. ein Substrat mit einem optischen Transmissionsgrad zwischen ca. 10 % und 90 % vorgesehen ist. Allerdings muss stets sichergestellt sein, dass der optische Transmissionsgrad des Substrats im Bereich der Durchbrechungen größer als der optische Transmissionsgrad des Substrats ohne Durchbrechungen und größer als der optische Transmissionsgrad der Farbannahmeschicht ist

Bei dem Ausführungsbeispiel der Figuren 2 und 3 stellen die Schnittlinien 22 vollständige Durchbrechungen des Polymersubstrats 20 dar, die neben dem taktil erfassbaren Schnittlinienraster auch einen Durchsichtsbereich in der Banknote erzeugen. Der Motivbereich 12 kann allerdings auch lediglich teilweise Durchbrechungen des Substrats umfassen, wie in den Ausführungsbeispielen der Figuren 4 bis 7 illustriert. Dabei ist in den gezeigten Querschnitten der deutlicheren Darstellung halber jeweils nur das mit dem Motivbereich versehene Polymersubstrat 20 dargestellt. Diese Situation entspricht dem Zustand des Substrats nach der Laserbeaufschlagung und vor dem Aufkaschieren der polymeren Deckschichten. Es versteht sich jedoch, dass in den fertigen Polymer-Banknoten der Motivbereich jeweils beidseitig mit einer dünnen, polymeren Deckschicht abgedeckt ist und dass auch hier Farbannahmeschichten, Schutzschichten oder weitere funktionelle Schichten vorgesehen sein können, die jeweils bereichsweise oder vollflächig vorgesehen sind. Insbesondere kann für alle erfindungsgemäßen Ausführungsformen eine opake Farbannahmeschicht mit einem dritten Transmissionsgrad vorgesehen sein, welcher kleiner als ein zweiter Transmissionsgrad ist, der dem Bereich der Durchbrechungen im Substrat zugeordnet ist. Der zweite Transmissionsgrad im Bereich der Durchbrechungen des Substrats ist erfindungsgemäß größer als der erste Transmissionsgrad des Substrats außerhalb des Bereichs dieser Durchbrechungen. Für ein Wertdokument mit einer solchen opaken Farbannahmeschicht ergeben sich dann interessante Auf- und/oder Durchlicht-Effekte, d.h., der visuelle Eindruck des Motivbereichs des Wertdokuments ist für einen Betrachter im Auflicht und/oder Durchlicht unterschiedlich, wodurch der Wiedererkennungswert und damit die Fälschungssicherheit eines solchen Wertdokuments deutliche erhöht wird.

Bei dem Ausführungsbeispiel der Fig. 4 wurde in dem opaken oder sogar intransparenten Polymersubstrat 20 durch die Einwirkung von Laserstrahlung in einem Motivbereich 40 ein Linienraster in Form von nur teilweisen Durchbrechungen 42 des Substrats 20 erzeugt. Die teilweisen Durchbrechungen bilden eine Vielzahl von Verdünnungslinien 42, in deren Bereich die Lichtdurchlässigkeit des Substrats 20 wegen der geringeren lokalen Schichtdicke erhöht ist. Bei einem 50 µm dicken Polymersubstrat 20 weisen die teilweisen Durchbrechungen 42 typischerweise eine Tiefe zwischen 10 µm und 40 µm auf. Im Ausführungsbeispiel gemäß Fig. 4 liegt die bevorzugte Tiefe also zwischen 20 % und 80 % der Schichtdicke des Substrats. Wie bereits weiter oben erwähnt, wird die Taktilität des Motivbereichs z.B. auch durch die Breite der teilweisen Durchbrechungen 42 beeinflusst.

Der so erzeugte Motivbereich 40 zeigt bei Betrachtung ein wasserzeichenähnliches Erscheinungsbild, bei dem das dargestellte Motiv im Auflicht kaum zu erkennen ist, während es im Durchlicht wegen der höheren Licht durchlässigkeit der verdünnten Bereiche deutlich in Erscheinung tritt. Zur Illustration zeigt Fig. 5 das visuelle Erscheinungsbild des Motivbereichs 40 einer zugehörigen fertigen Polymer-Banknote im Durchlicht. Der Motivbereich ist in diesem Ausführungsbeispiel durch gerade, divergierende Verdünnungslinien 42 mit zunehmendem Linienabstand gebildet. Der Motivbereich 40 stellt mit seinem äußeren Umriss wiederum eine geometrische Figur dar, beispielsweise ein Wappen 44, das in seinem Inneren einen nicht verdünnten Bereich 46 in Form der Denomination "20" der Polymer-Banknote enthält.

Auch der Motivbereich 40 ist durch die von den Verdünnungslinien 42 gebildeten Vertiefungen im Substrat und die geringe Schichtdicke der aufkaschierten Deckschichten taktil erfassbar. Die Taktilität des Motivbereichs 40 stellt neben dem wasserzeichenähnlichen Aufsicht/Durchsicht-Effekt ein weiteres, auch für einen Laien leicht prüfbares Echtheitsmerkmal der Polymemote dar.

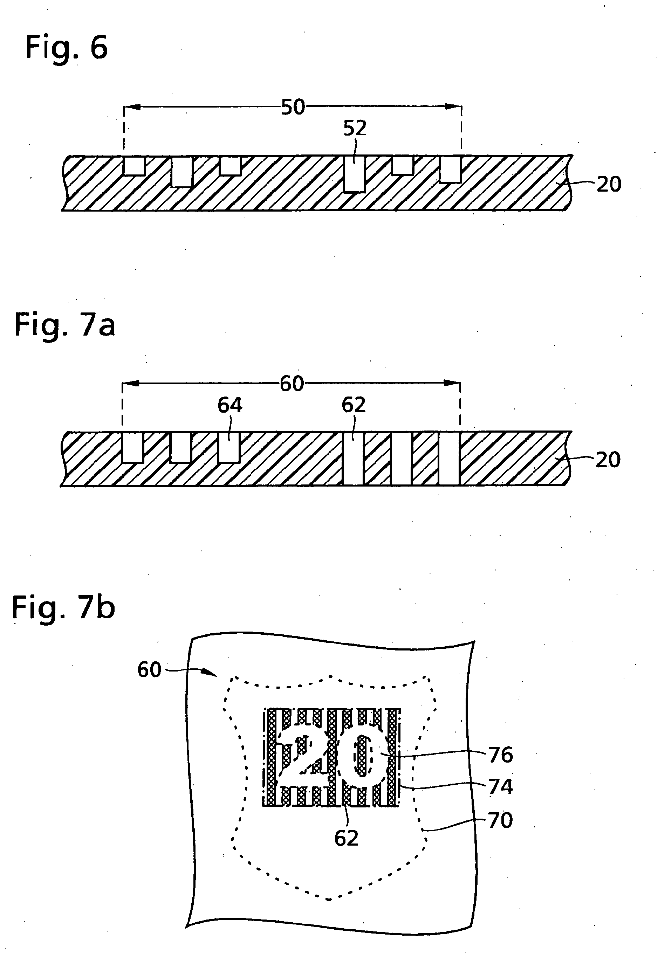

Wird bei der Laserbeaufschlagung die Laserenergie, genauer gesagt die Laserbestrahlung, also die Laserenergie pro Flächeneinheit, geeignet variiert, so können auch Reliefstrukturen mit unterschiedlich tiefen teilweisen Durchbrechungen 52 erzeugt werden, wie im Ausführungsbeispiel der Fig. 6 gezeigt. Bei Beibehaltung der Taktilität des Motivbereichs 50 kann dadurch ein mehrstufiger wasserzeichenähnlicher Aufsicht/Durchsichts-Effekt erzeugt werden, bei dem das gebildete Motiv bei Betrachtung im Auflicht praktisch nicht zu erkennen ist und im Durchlicht wegen der unterschiedlich hohen Lichtdurchlässigkeit mit unterschiedlichen Helligkeitswerten in Erscheinung tritt. Derartige mehrstufige Aufsicht/Durchsichts-Effekte eignen sich wegen der dadurch ermöglichten Halbtondarstellung besonders für komplexere Motive, wie etwa Portraitdarstellungen.

Die mit Bezug auf das Ausführungsbeispiel der Fig. 6 beschriebenen Aufsicht-/Durchsichts-Effekte können auch aus einer anderen Warte anhand der den jeweiligen Bereichen und Schichten zugeordneten Transmissionsgraden erläutert werden. Wie bereits erwähnt, weist die Variante der Fig. 6 an Stelle von vollständigen Durchbrechungen, lediglich teilweise Durchbrechungen 52 auf, die die Schichtdicke des intransparenten Substrats 20 reduzieren. Im Bereich der teilweisen Durchbrechungen 52 variiert somit die Schichtdicke des intransparenten Substrats 20 und geht gegebenenfalls bis auf Null zurück (siehe Fig. 7(a), Durchbrechungen 62). Entsprechend ändert sich der Transmissionsgrad der intransparenten Folie 20 im Bereich der teilweisen Durchbrechungen 52 derart, dass die intransparente Folie dort transluzent oder sogar transparent (vollständige Durchbrechung 62 in Fig. 7(a)) ist. Bei Betrachtung im Durchlicht ergibt sich somit ein Verlauf des Transmissionsgrades über den Bereich der Durchbrechungen 52, der dem eines Wasserzeichens in Papiersubstraten ähnlich ist. Bei Betrachtung im Auflicht sind die Durchbrechungen 52 der intransparenten Folie 20 durch die opaken Farbannahmeschichten verdeckt. Es versteht sich, dass die beschriebenen Aufsicht-/Durchsichts-Effekte, auch als "Auflicht-/Durchlicht-Effekte" bezeichnet, auch für den Betrachter wahrnehmbar sind, wenn an Stelle des intransparenten Substrats 20 ein opakes, d.h. ein Substrat mit einem Transmissionsgrad größer Null, oder sogar nur ein transluzentes Substrat mit einem Transmissionsgrad zwischen ca. 10 % und ca. 90 % vorgesehen ist. Allerdings muss stets sichergestellt sein, dass der Transmissionsgrad des Substrats im Bereich der Durchbrechungen größer als der Transmissionsgrad des Substrats ohne Durchbrechungen und größer als der Transmissionsgrad der Farbannahmeschicht ist.

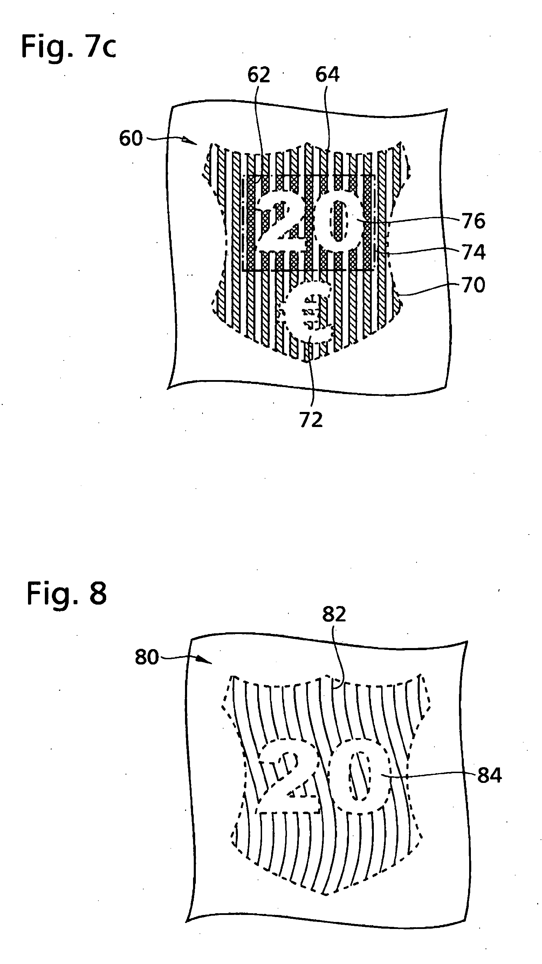

Teilweise und vollständige Durchbrechungen des Polymersubstrats können auch kombiniert werden, wie in Fig. 7 illustriert. Fig. 7(a) zeigt dazu einen Querschnitt nur des Polymersubstrats 20, Fig. 7(b) den visuellen Eindruck des Motivbereichs in Aufsicht und Fig. 7(c) den visuellen Eindruck des Motivbereichs in Durchsicht.

Mit Bezug zunächst auf Fig. 7(a) wurde in dem Motivbereich 60 durch Variation der Laserbestrahlung ein taktil erfassbares Linienraster erzeugt, das einerseits vollständige Durchbrechungen des Substrats in Form von parallelen Schnittlinien 62, andererseits nur teilweise Durchbrechungen des Substrats in Form von parallelen Verdünnungslinien 64 enthält. Die Schnittlinien 62 und die Verdünnungslinien 64 werden dabei durch Variation der Laserparameter als durchgehende Linien im selben Arbeitsgang erzeugt und schließen daher in Längsrichtung perfekt gepassert aneinander an.

Mit Bezug auf Fig. 7(a) sowie Fig. 4 und Fig. 6 sei noch angemerkt, dass die teilweisen Durchbrechungen im Substrat in einer nicht weiter dargestellten Ausführungsform auch von beiden Seiten des Substrats, gegebenenfalls zueinander gepassert eingebracht sein können. Eine solche Variante weist eine extrem hohe Fälschungssicherheit auf, wobei allerdings gleichzeitig aufgrund der erforderlichen Einbringung der teilweisen Durchbrechungen von beiden Seiten des Substrats ein größerer technischer Aufwand notwendig ist als in den in Fig. 4, 6 und 7(a) gezeigten Ausführungsformen, bei denen die teilweisen Durchbrechungen lediglich von einer Seite des Substrats eingebracht sind.

Wie am besten in der Durchsichtsansicht der Fig. 7(c) zu erkennen, bilden die Verdünnungslinien 64 einen Motivbereich mit einem äußeren Umriss 70 in Form eines Wappens. Ein innerer, nicht mit Verdünnungslinien versehener Bereich 72 weist die Form des Eurosymbols "€" auf. In einem rechteckigen Schnittbereich 74 innerhalb des Motivbereichs 60 wurde die Laserbestrahlung bei der Beaufschlagung so weit erhöht, dass anstelle von Verdünnungslinien durchgehende Schnittlinien 62 im Substrat erzeugt wurden, die in den Figuren durch eine engere Schraffur veranschaulicht ist Im Inneren des Schnittbereichs 74 wurde ein nicht geschnittener Bereich 76 in Form der Denomination "20" der Banknote stehen gelassen.

Wird der so erzeugte Motivbereich 60 im Auflicht betrachtet, wie in Fig. 7(b) gezeigt, so sind die Bereiche, die nur die nicht durchgehenden Verdünnungslinien 64 enthalten, praktisch nicht sichtbar und der Betrachter nimmt nur den Schnittbereich 74 mit den Schnittlinien 62 und der ungeschnittenen Denomination "20" (Bezugszeichen 76) wahr. Der Umriss und die Form des Wappens 70 sind im Auflicht dagegen praktisch nicht erkennbar, der Umriss 70 ist in Fig. 7(b) lediglich zur Angabe seiner Lage punktiert eingezeichnet.

Wird der Motivbereich 60 dagegen im Durchlicht betrachtet, wie in Fig. 7(c) dargestellt, so werden für den Betrachter aufgrund der höheren Lichtdurchlässigkeit sowohl die Bereiche 74 mit den Schnittlinien 62 als auch die Bereiche 70 mit den Verdünnungslinien 64 sichtbar. Vor dem hellen Hintergrund der Linien 62, 64 treten die ungeschnittenen und nicht verdünnten Bereiche 72, 76 in Form der um das Währungssymbol vervollständigten Denomination "20 €" deutlich hervor.

Da die Verdünnungslinien 64 und die Schnittlinien 62 im selben Arbeitsgang mit demselben Laserstrahl erzeugt werden, schließen sie in Längsrichtung perfekt gepassert aneinander an, wie in Fig. 7(c) an der oberen und unteren Kante des Schnittbereichs 74 zu erkennen. Der Schnittbereich 74 fügt sich daher bei Durchsichtsbetrachtung nahtlos in das umgebende Wappenmotiv 70 ein.

Ein derartiges, sich im Durchlicht vervollständigendes Motiv bietet einen hohen Aufmerksamkeits- und Wiedererkennungswert, der durch die taktile Erfassbarkeit des Motivbereichs 60 noch gesteigert wird.

Fig. 8 zeigt ein Polymersubstrat 20 mit einem Durchsichtsbereich 80 nach einem weiteren Ausführungsbeispiel der Erfindung. Wie bei dem Ausführungsbeispiel der Figuren 2 und 3 enthält der Durchsichtsbereich 80 eine Vielzahl von Schnittlinien 82, die durch Laserbeaufschlagung des opaken oder sogar intransparenten Polymersubstrats 20 erzeugt wurden, und die durch ihre Anordnung ein Motiv bilden. Wie bei Fig. 3 bildet der Durchsichtsbereich 80 mit seinem äußeren Umriss ein Wappen, das in seinem Inneren einen ungeschnittener Bereich 84 in Form der Denomination "20" der zugehörigen Banknote 10 enthält.

Im Unterschied zum Ausführungsbeispiel der Figuren 2 und 3 ist der Durchsichtsbereich 80 jedoch nicht durch gerade, sondern durch gekrümmte, äquidistante Schnittlinien 82 gebildet. Innerhalb des Bereichs 84 der Denomination wurde die Laserleistung des Schneidlasers jeweils unter die Schneideschwelle des Polymersubstrats 20 gesenkt, so dass dort keine Schnittlinien erzeugt wurden. Die Denomination 84 bleibt so als ungeschnittener Substratbereich stehen und ist vor dem Hintergrund des gerasterten Durchsichtsbereichs 80 vor allem im Durchlicht deutlich zu erkennen. Aufgrund der Vertiefungen der Schnittlinien 82 ist der Motivbereich 80 zudem taktil erfassbar, wie oben beschrieben.

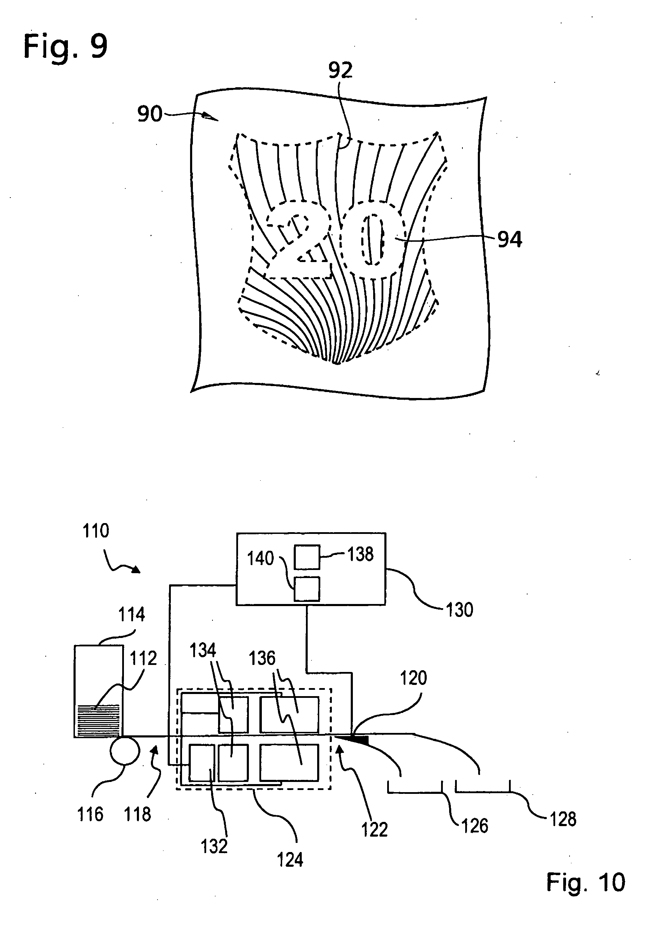

Fig. 9 zeigt ein weiteres Ausführungsbeispiel der Erfindung, bei dem der Motivbereich 90 eines Polymersubstrats durch gekrümmte und divergierende Verdünnungslinien 92 gebildet ist. Innerhalb des Bereichs 94 der Denomination wurde die Laserleistung des Schneidlasers soweit abgesenkt, dass dort keine Verdünnungslinien erzeugt wurden. Der Motivbereich 90 zeigt damit, wie das Ausführungsbeispiel der Fig. 5, ein wasserzeichenähnliches Erscheinungsbild, bei dem das dargestellte Motiv im Auflicht kaum, im Durchlicht dagegen deutlich zu erkennen ist. Zudem ist der von den Verdünnungslinien 92 gebildeten Motivbereich 90 taktil erfassbar.

Es versteht sich, dass die gezeigten Ausgestaltungen beliebig miteinander kombiniert werden können. Beispielsweise können auch gekrümmte äquidistante oder gekrümmte divergierende Verdünnungslinien mit unterschiedlicher Tiefe erzeugt werden. Gerade und/oder gekrümmte Verdünnungslinien und Schnittlinien können auch miteinander kombiniert werden, wie grundsätzlich in Fig. 7 illustriert

In anderen Ausführungsbeispielen kann statt des Polymersubstrats ein Substrat aus Banknotenpapier verwendet werden. Das Banknotenpapier kann dabei im wesentlichen aus Natur- und/oder Synthesefasern bestehen

Eine Wertdokumentbearbeitungsvorrichtung 110 in Fig.10, die im Beispiel zur Bearbeitung von Wertdokumenten in Form von Banknoten ausgebildet ist und die eine Vorrichtung zur Prüfung der Echtheit von Wertdokumenten in Form von Banknote 112 umfaßt, verfügt über ein Eingabefach 114 für die Eingabe von zu bearbeitenden Wertdokumenten 112, einen Vereinzeler 116, der auf Wertdokumente 112 in dem Eingabefach 114 zugreifen kann, eine Transporteinrichtung 118 mit einer Weiche 120, und entlang eines durch die Transporteinrichtung 118 gegebenen Transportpfades 122 eine vor der Weiche 120 angeordnete Sensoranordnung 124, und nach der Weiche 120 in verschiedenen Zweigen des Transportpfades 122 zwei Ausgabefächer 126 und 128 zur Aufnahme bearbeiteter Wertdokumente. Eine Steuer- und Auswerteeinrichtung 130 ist wenigstens mit der Sensoranordnung 124 und der Weiche 120 über Signalverbindungen verbunden und dient zur Auswertung von Sensorsignalen der Sensoranordnung 124 und Ansteuerung wenigstens der Weiche 120 in Abhängigkeit von dem Ergebnis der Auswertung der Sensorsignale.

Die Sensoranordnung 124 in Verbindung mit der Steuer- und Auswerteeinrichtung 130 dient zur Erfassung von Eigenschaften der Wertdokumente 112 und Bildung von diese Eigenschaften wiedergebenden Sensorsignalen. Die Sensoranordnung 124 umfaßt dazu wenigstens einen Sensor; in diesem Ausführungsbeispiel sind drei Sensoren vorgesehen, nämlich ein erster Sensor 132, im Beispiel ein optischer Sensor, der von dem Wertdokument 112 remittierte optische Strahlung erfaßt, ein zweiter Sensor 134, im Beispiel ebenfalls ein optischer Sensor, der durch das Wertdokument transmittierte optische Strahlung erfaßt, und ein dritter Sensor 136, im Beispiel ein akustischer Sensor, genauer ein Ultraschallsensor, der von dem Wertdokument stammende, insbesondere transmittierte, Ultraschallsignale erfaßt.

Während des Vorbeitransports eines Wertdokuments 112 erfassen die Sensoren 132,134 und 136 entsprechend ihrer Funktion jeweilige Eigenschaften von durch die Relativlage der Sensoren zu dem Wertdokument bestimmten Abtastbereichen auf dem Wertdokument, wobei die entsprechenden Sensorsignale gebildet werden. Jedem der Abtastbereiche ist dabei ein Ort zugeordnet, der die Lage der Abtastbereiche für den jeweiligen Sensor zueinander und/oder relativ zu dem Wertdokument wiedergibt.

Auf der Basis der analogen oder digitalen Sensorsignale der Sensoren 132, 134,136 prüft die Steuer- und Auswerteeinrichtung, ob das von den Sensoren erfaßte Wertdokument als echt angesehen wird oder nicht, und steuert in Abhängigkeit von dem Ergebnis der Prüfung die Transporteinrichtung 118, insbesondere die Weiche 120 so an, dass das Wertdokument entsprechend dem Ergebnis in eines der Ausgabefächer transportiert wird, beispielsweise in das Ausgabefach 126, im Beispiel für als echt erkannte Wertdokumente, oder das Ausgabefach 128, im Beispiel für nicht als echt erkannte Wertdokumente.

Die Steuer- und Auswerteeinrichtung 130 verfügt dazu insbesondere neben entsprechenden Schnittstellen für die Sensoren über einen Prozessor 138 und einen mit dem Prozessor 138 verbundenen Speicher 140, in dem wenigstens ein Computerprogramm mit Programmcode gespeichert ist, bei dessen Ausführung der Prozessor 138 die Vorrichtung steuert bzw. die Sensorsignale, insbesondere zur Prüfung der Echtheit eines geprüften Wertdokuments, auswertet und entsprechende der Auswertung die Transporteinrichtung 118 ansteuert.

Hierzu wird von der Steuer- und Auswerteeinrichtung 130 bei einer Sensorsignalauswertung für jeden der Sensoren wenigstens eine Abtastbereichseigenschaft, d. h. wenigstens eine lokale Wertdokumenteigenschaft, ermittelt, die für die Überprüfung der Wertdokumente in Bezug auf deren Echtheit relevant ist. Vorzugsweise werden mehrere dieser Eigenschaften ermittelt. In Abhängigkeit von den Abtastbereichseigenschaften ermittelt die Steuer- und Auswerteinrichtung 130 für die verschiedenen Sensoren jeweils Echtheitssignale, die darstellen, ob die ermittelten Abtasteigenschaften einen Hinweis auf die Echtheit des Wertdokuments darstellen oder nicht. In Folge dieser Signale können entsprechende Daten in der Steuer- und Auswerteinrichtung 120 zur späteren Verwendung gespeichert werden.

In Abhängigkeit von den Echtheitssignalen ermittelt die Steuer- und Auswerteeinrichtung 130 ein Gesamtergebnis für die Echtheitsprüfung gemäß einem vorgegebenen Gesamtkriterium und bildet in Abhängigkeit von dem Ergebnis ein Steuersignal für die Transporteinrichtung 118, insbesondere die Weiche 120. Beispielsweise kann das Gesamtkriterium so aussehen, dass eine Echtheit nur erkannt wird, wenn alle Echtheitssignale Hinweise auf eine Echtheit des Wertdokuments darstellen. Ist dieses Gesamtkriterium erfüllt, das Wertdokument also als echt klassifiziert, steuert die Steuer- und Auswerteeinrichtung 130 durch Abgabe des entsprechenden Steuersignals die Transporteinrichtung 118 so an, dass das Wertdokument in das Ausgabefach für als echt erkannte Wertdokumente, im Beispiel das Fach 126, transportiert wird. Andernfalls steuert sie 130 durch Abgabe des entsprechenden Steuersignals die Transporteinrichtung 118 so an, dass das Wertdokument in das Ausgabefach für als nicht echt erkannte Wertdokumente, im Beispiel das Fach 128, transportiert wird.

Zur Bearbeitung von Wertdokumenten 112 werden in das Eingabefach 114 als Stapel oder einzeln eingelegte Wertdokumente 112 von dem Vereinzeler 116 vereinzelt und vereinzelt der Transporteinrichtung 118 zugeführt, die die vereinzelten Wertdokumente 112 der Sensoranordnung 124 zuführt. Diese erfaßt Eigenschaften der Wertdokumente 12, wobei Sensorsignale gebildet werden, die die Eigenschaften des Wertdokuments wiedergeben. Die Steuer- und Auswerteeinrichtung 130 erfaßt die Sensorsignale, ermittelt in Abhängigkeit von diesen eine Echtheitsbewertung des jeweiligen Wertdokuments und steuert in Abhängigkeit von dem Ergebnis die Weiche 120 wie beschrieben an

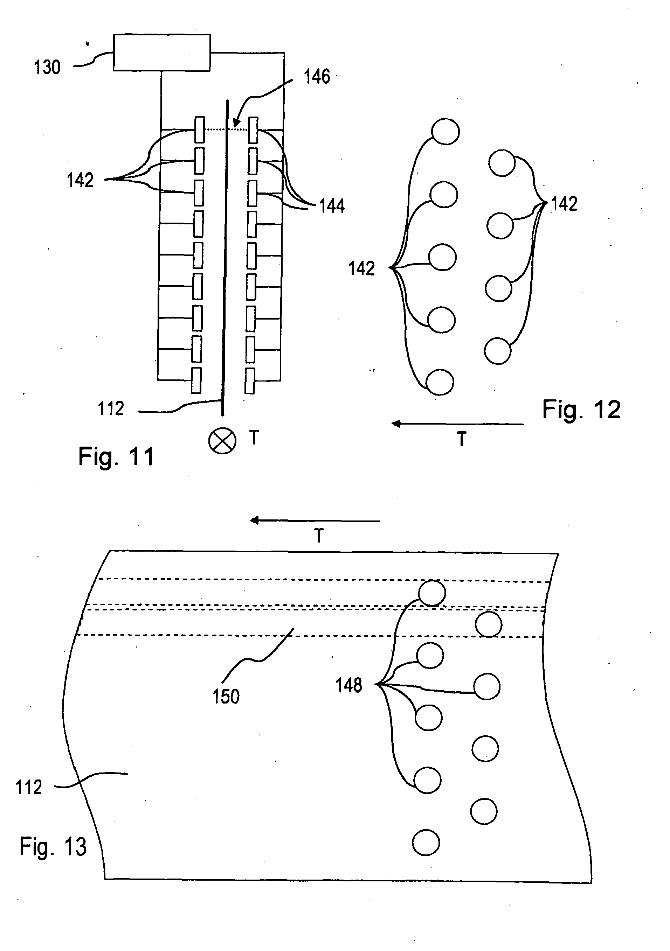

Der Sensor 136 ist im Beispiel folgendermaßen aufgebaut (vgl. Fig. 11 und 12).

Der Sensor 136 verfügt über mehrere, sowohl quer zu einer Transportrichtung T der Wertdokumente 112 als auch längs zu dieser im wesentlichen in einer Ebene parallel zu einer entlang des Transportpfads 122 der transportierten Wertdokumente 112 angeordnete, von der Steuer- und Auswerteeinrichtung 130 angesteuerte Ultraschallwandler 142 zur Abgabe von Ultraschallpulsen auf das daran vorbeitransportierte Wertdokumente Diese Ultraschallwandler 142 dienen somit als Ultraschallsender.

Den Ultraschallwandlern bzw. -sendern 142 in Bezug auf den Transportpfad 122 gegenüber sind in gleicher Zahl als Ultraschallempfänger dienende Ultraschallwandler 144, die mit der Steuer- und Auswerteeinrichtung 130 über in den Figuren nicht gezeigte Schnittstellen und schematisch gezeigte Signalverbindungen so angeordnet, dass diese von einem entlang des Transportpfads 122 transportierten Wertdokument 112 ausgehenden, durch Beschallung mit Ultraschallpulsen der Ultraschallsender 142 hervorgerufene Ultraschallwellen empfangen können.

Jedem der Ultraschallsender 142 ist dabei einer der Ultraschallempfänger 144 so zugeordnet, dass zwischen diesen eine wenigstens näherungsweise orthogonal zu einem entlang des Transportpfads 122 transportierten Wertdokument 112 verlaufende Ultraschallstrecke 146 ergibt, entlang derer ein von dem jeweiligen Ultraschallsender 142 abgegebener Ultraschallpuls zu dem diesem zugeordneten Ultraschallempfänger 144 läuft. Mit jedem Paar von Ultraschallsendern und diesen zugeordneten Ultraschallempfängern bzw. mit jeder Ultraschallstrecke 146 in Verbindung mit der Steuer- und Auswerteeinrichtung 130 ist damit ein Wert für die Ultraschalltransmission des Wertdokuments 112 an dem beschallten Ort auf dem Wertdokument ermittelbar.

Die Ultraschallwandler 142 bzw. 144 sind so ausgebildet, dass sie zur Abgabe bzw. zum Empfang von Ultraschallpulsen mit einer Dauer im Bereich von im Beispiel etwa 30 µs und einer Ultraschallfrequenz, d.h. einem Amplitudenmaximum des Frequenzspektrums des Ultraschallpulses, von im Beispiel etwa 400 kHz ausgebildet sind. Weiter sind sie so dimensioniert, dass jeweils ein auf einem entlang des Transportpfads 122 transportierten Wertdokument 112 bei Beschallung mit den Ultraschallpulsen beschallter Fleck 148, d.h. Abtastbereich, einen Durchmesser von etwa 2 mm aufweist. Jedem der Abtastbereiche ist als Ort der Mittelpunkt des Abtastbereiches zugeordnet.

Die Ultraschallsender und -empfänger 142 bzw. 144 sind in zu dem Wertdokument 112 in dem Transportpfad 122 parallelen Ebenen so angeordnet, dass Werte für die Ultraschalltransmission für sich parallel zu der Transportrichtung T erstreckende streifenförmige Erfassungsbereiche 150 erfaßbar sind, wie in Fig. 13 für eine Momentaufnahme während der Erfassung dargestellt.

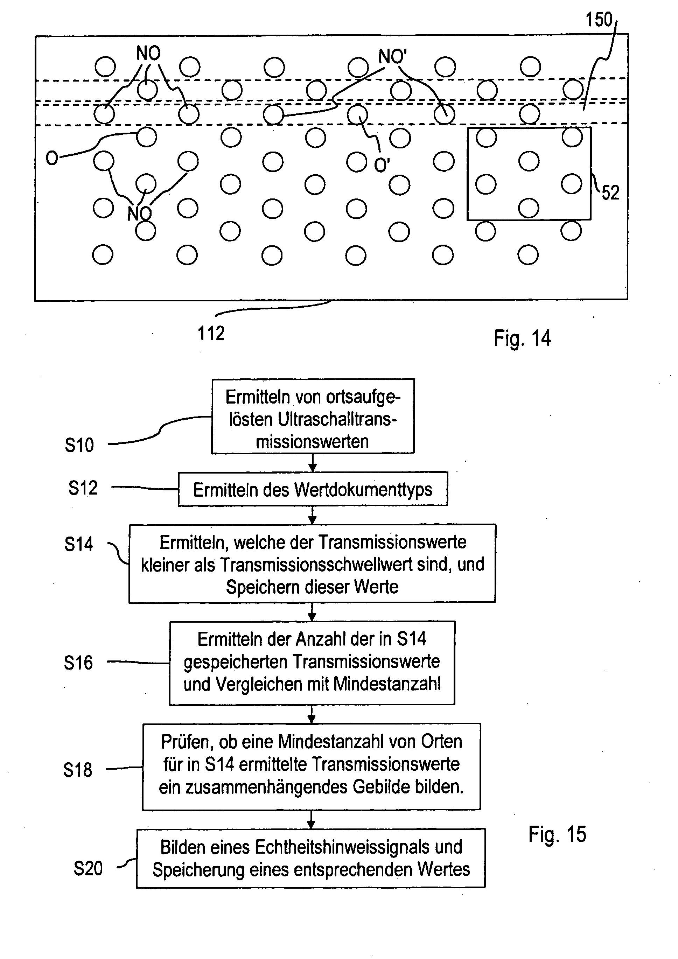

Insgesamt kann sich damit eine für ein Wertdokument 112 schematisch in Fig. 13 und insbesondere Fig. 14 dargestellte Verteilung von Abtastbereichen 148 bzw. Orten ergeben, für die Transmissionswerte erfaßbar sind, wenn das Wertdokument 112 mit konstanter geeignet vorgegebener Geschwindigkeit durch die Ultraschallstrecken 146 transportiert wird und während des Transports in vorgegebenen Zeitabständen Transmissionswerte erfaßt werden. In diesem Ausführungsbeispiel erfolgt die Ansteuerung unabhängig von dem Eintritt eines Wertdokuments 112 in den Erfassungsbereich des Sensors 136. Zur Unterdrückung eines unerwünschten Empfangs von Ultraschallpulsechos kann der jeweilige Ultraschallempfänger für eine Ultraschallstrecke gegenüber dem Zeitpunkt der Abgabe des Ultraschallpulses durch den Ultraschallsender für die Ultraschallstrecke um etwas weniger als die Pulslaufzeit für die Ultraschallstrecke verzögert eingeschaltet und vor der doppelten Pulslaufzeit seit der Abgabe wieder abgeschaltet werden.

Es ergibt sich so eine regelmäßige Anordnung der Abtastbereiche bzw. Orte auf dem Wertdokument 112, im Beispiel eine im Wesentlichen hexagonale Anordnung. Die Anordnung der Ultraschallsender und -empfänger 142 bzw. 144 ist so gewählt, dass der Abstand aufeinander folgender Orte in einem der Streifen bzw. Erfassungsbereiche 150 kleiner als 1 cm ist. Im Beispiel beträgt dazu der Abstand nächstbenachbarter Orte etwa 1 cm.

Der Sensor 136 verfügt im Ausführungsbeispiel insbesondere über vierundzwanzig Ultraschallsender /-empfänger-Paare bzw. Ultraschallstrecken 146, die so angeordnet sind, dass die Erfassungsbereiche 150 bzw. Spuren einen Abstand zwischen 3 und 4 mm aufweisen.

Zur Erfassung der Transmissionswerte erfaßt die Steuer- und Auswerteeinrichtung 130 in konstanten Zeitabständen die Sensorsignale der Ultraschallempfänger 144, die die Intensität bzw. Leistung einzelner empfangender Ultraschallpulse als Funktion der Zeit und damit wegen der konstanten Transportgeschwindigkeit auch des Ortes wiedergeben. Anhand dieser Signale ermittelt die Steuer- und Auswerteeinrichtung 130 auch das Eintreten eines Wertdokuments in den Erfassungsbereich des Sensors 136. In anderen Ausführungsbeispielen kann das Eintreten auch in Abhängigkeit von Signalen anderer Sensoren und der Transportgeschwindigkeit erfolgen. Die Transmissionswerte sind dabei unter der Annahme einer grundsätzlich konstanten Sendeleistung der Ultraschallsender 142 einfach durch die empfangenen Ultraschallpulsenergien gegeben. In anderen Ausführungsbeispielen ist es jedoch auch möglich, die empfangenen Ultraschallpulsenergien durch eine vorgegebene oder gemessene Ultraschallpulsenergie gesendeter Pulse zu dividieren und damit normierte Transmissionswerte zu erhalten.

Die ermittelten Transmissionswerte werden den Orten, für die sie erfaßt wurden, zugeordnet gespeichert Dies kann beispielsweise in der Art erfolgen, dass für jeden der Erfassungsbereiche 150 getrennt die Transmissionswerte in der zeitlichen Reihenfolge ihrer Erfassung in dem Speicher 140 gespeichert werden. Der Erfassungsbereich 150 entspricht dann einer Koordinate in einer Richtung quer zur Transportrichtung und die Stellung in der Reihe entlang des Erfassungsbereichs 150 einer Koordinate in Transportrichtung T.

Die Frequenz, mit der die Ultraschallpulse nacheinander abgegeben werden, und Transportgeschwindigkeit des Wertdokuments sind so gewählt, dass entlang der Transportrichtung des Wertdokuments in jedem Erfassungsbereich 150 wenigstens fünf Transmissionswerte erfaßt werden. Im Beispiel werden Transmissionswerte im Abstand von 3 mm, vorzugsweise 2 mm, entlang der Transportrichtung oder 60 bis 90 Transmissionswerte für den Erfassungsbereich erfaßt. Es können aber auch mehr oder weniger Werte sein.

Ausgehend von diesen für ein Wertdokument als Funktion des Ortes vorliegenden Transmissionswerten führt die Steuer- und Auswerteeinrichtung 130, genauer der Prozessor 138 nun bei der Abarbeitung von Programmcode des in dem Speicher 140 gespeicherten Computerprogramms folgendes Verfahren zur Ermittlung der Echtheit des Wertdokuments aus. Das Verfahren ist grob schematisch in Fig. 15 als Ablaufdiagramm veranschaulicht.

Bei dem geschilderten Ausführungsbeispiel wird als vorgegebener Typ von Wertdokumenten der in Fig. 1 gezeigte Typ von Banknote verwendet. Bei dem Verfahren wird ein Transmissionsschwellwert verwendet, der im vorliegenden Beispiel dadurch erhalten wird, dass für vorgegebene Referenzbanknoten des genannten Typs für einen Referenzbereich ohne Hohlräume, der durch die gesamte Banknote bis auf den Hohlräume enthaltenden Bereich 152 gebildet wird, Transmissionswerte erfaßt und ein Mittelwert über diese Transmissionswerte gebildet wird. Der Mittelwert wird mit einem Faktor zwischen 0,1 und 0,9, im Beispiel 0,75, multipliziert, das Ergebnis ist der Transmissionsschwellwert. Die obere Grenze des Intervalls, in dem die Transmissionswerte liegen müssen, wird auf den Transmissionsschwellwert gesetzt. Die untere Grenze ist der Schwellwert, der zur Erkennung von übereinanderliegenden Wertdokumentabschnitten bzw. sich wenigstens teilweise überlappenden, aneinander anliegenden Wertdokumenten des vorgegebenen Typs verwendet wird. Dieser kann beispielsweise durch Messung der Transmissionswerte für zwei aneinander anliegende Referenzwertdokumente des vorgegebenen Typs, Mittlung der gemessenen Transmissionswerte und nachfolgende Multiplikation mit einem Faktor größer als 1, beispielsweise 2, ermittelt werden.

In Schritt S10 werden mittels des Ultraschallsensors und der Steuer- und Auswerteeinrichtung ortsaufgelöst Transmissionswerte für die Transmission von Ultraschall durch das Wertdokument ermittelt.

In Schritt S12 ermittelt die Steuer- und Auswerteeinrichtung 130, ob das Wertdokument einen vorgegebenen Wertdokumenttyp hat und welche Lage es hat. Ist dies der Fall, wird der Wertdokumenttyp zur weiteren Verwendung gespeichert. Andernfalls erfolgt eine Fehlermeldung, auf die hin das Verfahren abgebrochen wird. Zur Ermittlung des Wertdokumenttyps und der Lage können beispielsweise die Daten eines der optischen Sensoren verwendet werden. Verfahren hierzu sind dem Fachmann bekannt

In den Schritten S14 und S16 wird geprüft, ob eine vorgegebene Anzahl von Transmissionswerten kleiner als der vorgegebene Transmissionsschwellwert ist, der einer Transmission entspricht, die kleiner als die Transmission des Referenzbereichs des Wertdokuments ist, der den Hohlraum bzw. die Hohlräume nicht aufweist.

In Schritt S14 werden dazu die Transmissionswerte in dem für den Wertdokumenttyp vorgegebenen Bereich, in Fig.1 der Bereich 152, daraufhin überprüft, ob die Transmissionswerte kleiner als der für Wertdokumente des vorgegebenen Typs vorgegebene Transmissionsschwellwert sind. Dies erfolgt im vorliegenden Beispiel dadurch, dass geprüft wird, ob die Transmissionswerte innerhalb des für Wertdokumente des vorgegebenen Typs vorgegebenen Intervalls oder außerhalb dieses Intervalls liegen. Der Bereich 151 ist im Beispiel vorzugsweise möglichst klein, aber so gewählt, dass die Projektion der Hohlräume für Wertdokumente des vorgegebenen Typs auf die Fläche des jeweiligen Wertdokuments, vorzugsweise die Fläche des Sicherheitsmerkmals sicher, d. h. unter Berücksichtigung der durchschnittlichen Produktionsschwankungen bei der Herstellung der Wertdokumente, innerhalb des Bereichs liegen. Unter der Fläche des Sicherheitsmerkmals wird dabei die Fläche des kleinsten Bereichs der Fläche des Wertdokuments verstanden, der durch eine geschlossene Kurve gebildet wird und in dem die Projektion des Hohlraums bzw. die Projektionen der Hohlräume liegen. Die den Transmissionswerten, die innerhalb des Intervalls liegen, entsprechenden Orte werden gespeichert.

In Schritt S16 wird geprüft, ob eine vorgegebene Anzahl bzw. Zahl der Transmissionswerte in dem vorgegebenen Bereich 152 größer als der Transmissionsschwellwert ist. Die Anzahl bzw. Zahl der Transmissionswerte ist in Abhängigkeit von dem Typ des Wertdokuments, insbesondere dem kleinsten Abschnitt des Wertdokuments, in dem das Sicherheitsmerkmal bzw. die Hohlräume des Sicherheitsmerkmals angeordnet sind, und der Ortsauflösung des Ultraschallsensors vorgegeben, und ist als Mindestanzahl aufzufassen. Zur Prüfung wird die Anzahl der in Schritt S14 ermittelten Transmissionswerte, die in dem Intervall liegen, ermittelt und mit der Mindestanzahl verglichen. Das Ergebnis des Vergleichs wird gespeichert.

In Schritt S18 wird zusätzlich als weiteres Kriterium geprüft, ob die Orte, die der vorgegebenen Anzahl von Transmissionswerten entsprechen, ein zusammenhängendes Gebilde bilden. Dazu werden die den Transmissionswerten, die innerhalb des Intervalls liegen, entsprechenden Orte ermittelt. Danach wird geprüft, ob es unter diesen Orten eine Gruppe mit wenigstens der Mindestanzahl gibt, die eine zusammenhängenden Bereich bilden, d. h. ob zu jedem der Orte der jeweiligen Gruppe wenigstens ein weiterer der Orte der Gruppe unmittelbar benachbart ist.

Ergeben die Prüfungen in den Schritten S16 und S18, dass die vorgegebene Anzahl erreicht wurde und die Orte, die Transmissionswerten in dem Intervall zugeordnet sind, einen zusammenhängenden Bereich bilden, bildet die Steuer- und Auswerteeinrichtung 130 in Schritt S20 ein Signal, das einen Hinweis auf die Echtheit des Sicherheitsmerkmals bzw. des Wertdokuments darstellt.

Andernfalls bildet die Steuer- und Auswerteeinrichtung 130 ein Signal, das einen Hinweis auf das Vorliegen einer Fälschung des Wertdokuments darstellt.

Das Signal dient zur Speicherung eines entsprechenden Echtheitshinweiswertes.

Das Signal bzw. der Echtheitshinweiswert wird wie oben beschrieben mit entsprechenden Signalen bzw. Echtheitshinweiswerten für die anderen Sensoren zur Ermittlung der Echtheit des Wertdokuments herangezogen.

Ein zweites Ausführungsbeispiel unterscheidet sich von dem geschilderten ersten Ausführungsbeispiel dadurch, dass in einem Schritt S13 zwischen dem unveränderten Schritt S10 und einem den Schritt S14 ersetzenden Schritt S14' der vorgegebene Transmissionsschwellwert auf der Basis der erfaßten Transmissionswerte für das Wertdokument ermittelt wird. Der Schritt S13 kann vor oder nach Schritt S12 durchgeführt werden. Dazu ermittelt die Steuer- und Auswerteeinrichtung 130 einen arithmetischen Mittelwert über alle für das Wertdokument erfaßten Transmissionswerte außerhalb des Bereichs 152. Dieser Mittelwert, im Beispiel um 10% erniedrigt, wird als vorgegebener Transmissionsschwellwert verwendet, der als obere Grenze des Intervalls gesetzt wird. Die untere Grenze bleibt unverändert.

Ein drittes Ausführungsbeispiel unterscheidet sich von dem ersten Ausführungsbeispiel dadurch, dass statt des Schritts S18 ein Schritt S18' ausgeführt wird, in dem statt der Prüfung, ob die Transmissionswerte, die den Transmissionsschwellwert unterschreiten, eine Prüfung durchgeführt wird, bei der die Verteilung derjenigen Transmissionswerte in dem vorgegebenen Bereich, die kleiner als der Transmissionsschwellwert sind, berücksichtigt wird. Genauer wird geprüft, ob die Orte, die Transmissionswerten entsprechen, die innerhalb des Intervalls liegen, das in Fig. 3 erkennbare Muster aus dem Bereich 24 mit Hohlräumen und dem darin ausgebildeten Bereich 26 ohne Hohlräume bilden.

Ergeben die Prüfungen in den Schritten S16 und S18', dass die vorgegebene Anzahl erreicht wurde und die Orte, die Transmissionswerten in dem Intervall zugeordnet sind, die vorgegebene Verteilung aufweisen, d.h. hier das vorgegebene Muster bilden, bildet die Steuer- und Auswerteeinrichtung 130 in einem den Schritt S20 ersetzenden Schritt S20' ein Signal, das einen Hinweis auf die Echtheit des Sicherheitsmerkmals bzw. des Wertdokuments darstellt.

Die weitere Verarbeitung erfolgt wie im ersten Ausführungsbeispiel.

Ein weiteres Ausführungsbeispiel unterscheidet sich von dem ersten Ausführungsbeispiel dadurch, dass der Schritt S18 entfällt, und in einem dem Schritt S20 entsprechenden Schritt S20" das Signal nur in Abhängigkeit von dem Ergebnis in Schritt S16 gebildet wird.

Noch andere Ausführungsbeispiele unterscheiden sich von den zuvor beschriebenen Ausführungsbeispielen dadurch, dass nicht nur Transmissionswerte in dem Bereich 152 geprüft werden, sondern alle Transmissionswerte. Es werden dann Gruppen von Transmissionswerten gesucht, die dadurch gegeben sind, dass die den Transmissionswerten zugeordneten Orte ein zusammenhängendes Gebilde bilden. Unter diesen werden dann Gruppen gesucht, deren Anzahl von Transmissionswerten größer als die Mindestanzahl ist. Schließlich wird dann die Lage der Orte, die den Transmissionswerten der Gruppe entsprechen, auf dem Wertdokument ermittelt.

Wird eine Gruppe gefunden und liegen deren Orte in dem vorgegebenen Bereich 152 wird ein Signal gebildet bzw. ein Wert gespeichert, das bzw. der einen Hinweis auf die Echtheit des Wertdokuments darstellt.

Weitere Ausführungsbeispiele unterscheiden sich von den zuvor beschriebenen Ausführungsbeispielen dadurch, dass die Ultraschallsender und -empfänger so angeordnet sind, dass die zwischen diesen jeweils gebildeten Ultraschallstrecken gegenüber der Transportebene, in der Wertdokumente durch den Ultraschallsensor transportiert werden, geneigt verlaufen. In diesem Fall kann Ultraschall auch als Dauerschall abgegeben werden, wobei die Empfänger entsprechend modifiziert sind.

Noch andere Ausführungsbeispiele unterscheiden sich von den zuvor geschilderten Ausführungsbeispielen dadurch, dass statt eines Polymersubstrats ein Substrat aus Banknotenpapier verwendet wird, in dem die die Hohlräume bildenden Durchbrechungen ausgebildet sind. Das Banknotenpapier kann im wesentlichen aus Natur- und/oder Synthesefasern bestehen.

## Patentansprüche

1. Verfahren zur Untersuchung eines blatt- oder kartenförmigen Wertdokuments (10) eines vorgegebenen Typs mit einem Sicherheitsmerkmal (22,24,26), das einen oder mehrere in dem Wertdokument (10) ausgebildete Hohlräume (22; 42; 52; 62, 64) aufweist, dessen bzw. deren Weite in wenigstens einer jeweils vorgegebenen Richtung 10 µm übersteigt, bei dem ortsaufgelöst Transmissionswerte für die Transmission von Ultraschall in einem vorgegebenen Frequenzbereich ermittelt werden, und bei dem unter Verwendung der Transmissionswerte geprüft wird, ob eine vorgegebene Anzahl von den Transmissionswerten einen vorgegebenen Transmissionsschwellwert unterschreiten, der einer Transmission entspricht, die kleiner als die Transmission wenigstens eines Referenzbereichs (152) des Wertdokuments (10) oder wenigstens eines Referenzwertdokuments ist, der den Hohlraum (22; 42; 52; 62,64) bzw. die Hohlräume (22; 42; 52; 62, 64) nicht aufweist.

2. Verfahren nach Anspruch 1, bei dem der Ultraschall eine Frequenz im Bereich von 50 kHz bis 800 kHz aufweist.

3. Verfahren nach einem der vorhergehenden Ansprüche, bei dem zur Ermittlung der Transmissionswerte Ultraschallpulse verwendet werden.

4. Verfahren nach einem der vorhergehenden Ansprüche, bei dem der Transmissionsschwellwert unter Verwendung der ermittelten Transmissionswerte ermittelt wird.

5. Verfahren nach einem der Ansprüche 1 bis 3, bei dem der Transmissionsschwellwert durch Untersuchungen von Referenzwertdokumenten gleichen Typs ermittelt wurde.

6. Verfahren nach einem der vorhergehenden Ansprüche, bei dem bei der Prüfung ermittelt wird, ob der jeweilige Transmissionswert innerhalb eines vorgegebenen Intervalls liegt, dessen obere Grenze der Transmissionsschwellwert ist.

7. Verfahren nach einem der vorhergehenden Ansprüche, bei dem bei der Prüfung nur Transmissionswerte für einen vorgegebenen Bereich (151) des Wertdokuments verwendet werden.

8. Verfahren nach Anspruch 7, bei dem bei der Prüfung auch die Verteilung der Transmissionswerte in dem vorgegebenen Bereich (151) und/oder derjenigen Transmissionswerte in dem vorgegebenen Bereich, die kleiner als der Transmissionsschwellwert sind, berücksichtigt wird.

9. Verfahren nach einem der vorhergehenden Ansprüche, bei dem zusätzlich geprüft wird, ob die Orte, die der vorgegebenen Anzahl von Transmissionswerten entsprechen, ein zusammenhängendes Gebilde bilden.

10. Verfahren nach einem der vorhergehenden Ansprüche, bei dem eine Ausdehnung des Hohlraums (22; 42; 52; 62, 64) oder der Hohlräume (22; 42; 52; 62,64) in der oder einer anderen für den jeweiligen Hohlraum vorgegebenen Richtung parallel zu einer Fläche des Wertdokuments (10) größer als 100 µm ist.

11. Verfahren nach einem der vorhergehenden Ansprüche, bei dem eine Ausdehnung des Hohlraums oder der Hohlräume (22; 42; 52; 62, 64) in einer Richtung senkrecht zu einer Fläche des Wertdokuments (10) größer als 30% der Gesamtdicke des Wertdokuments im Bereich des Hohlraums (22; 42; 52; 62, 64) bzw. der Hohlräume (22; 42; 52; 62, 64) und/ oder größer als 20 µm ist.

12. Verfahren nach einem der vorhergehenden Ansprüche, bei dem der Hohlraum (22; 42; 52; 62, 64) oder wenigstens zwei der Hohlräume (22; 42; 52; 62, 64) linienförmig ausgebildet sind.

13. Verfahren nach einem der vorhergehenden Ansprüche, bei dem das Wertdokument (10) ein Substrat (20) umfaßt, das teilweise oder, vorzugsweise vollständige, Durchbrechungen (22; 42; 52; 62) aufweist, und die Durchbrechungen (22; 42; 52; 62) beidseitig durch an dem Substrat (20) gehaltene Deckschichten (30) abgedeckt sind und die abgedeckten Durchbrechungen (22; 42; 52; 62, 64) die Hohlräume bilden.

14. Verfahren nach Anspruch 13, bei dem die Durchbrechungen (22; 42; 52; 62, 64) in einem Motivbereich (12) des Wertdokuments (10) angeordnet sind.

15. Verfahren nach Anspruch 14, bei dem der Motivbereich (12) einen im Auflicht und/ oder Durchlicht veränderten visuellen Eindruck aufweist und/ oder in Form eines Musters, von Zeichen oder einer Codierung ausgebildet ist.

16. Verfahren nach einem der Ansprüche 13 bis 15, bei dem die Durchbrechungen (22; 42; 52; 62) linienförmig ausgebildet sind und vorzugsweise eine Breite zwischen 0,05 mm und 1 mm aufweisen.

## Claims

1. A method for examining a sheet-shaped or card-shaped value document (10) of a specified type with a security feature (22, 24, 26) having one or more cavities (22; 42; 52; 62, 64) configured in the value document (10), the width of the cavity or cavities in at least one respectively specified direction exceeding 10 µm, wherein transmission values are established in a locally resolved manner for the transmission of ultrasound in a specified frequency range, and
wherein, employing the transmission values, it is checked whether a specified number of the transmission values undershoot a specified transmission threshold value which corresponds to a transmission that is smaller than the transmission of at least one reference region (152) of the value document (10) or of at least one reference value document not having the cavity (22; 42; 52; 62, 64) or cavities (22; 42; 52; 62, 64).

2. The method according to claim 1, wherein the ultrasound has a frequency in the range of 50 kHz to 800 kHz.

3. The method according to any of the preceding claims, wherein ultrasonic pulses are employed for establishing the transmission values.

4. The method according to any of the preceding claims, wherein the transmission threshold value is established while employing the established transmission values.

5. The method according to any of claims 1 to 3, wherein the transmission threshold value was established by examinations of reference value documents of the same type.

6. The method according to any of the preceding claims, wherein upon the check it is established whether the respective transmission value lies within a specified interval whose upper limit is the transmission threshold value.

7. The method according to any of the preceding claims, wherein upon the check there are only employed transmission values for a specified region (151) of the value document.

8. The method according to claim 7, wherein upon the check there is also taken into consideration the distribution of the transmission values in the specified region (151) and/or of those transmission values in the specified region that are smaller than the transmission threshold value.

9. The method according to any of the preceding claims, wherein it is additionally checked whether the locations corresponding to the specified number of transmission values form a contiguous structure.

10. The method according to any of the preceding claims, wherein an extension of the cavity (22; 42; 52; 62, 64) or cavities (22; 42; 52; 62, 64) in the or another direction specified for the respective cavity, parallel to a surface of the value document (10), is greater than 100 µm.

11. The method according to any of the preceding claims, wherein an extension of the cavity or cavities (22; 42; 52; 62, 64) in a direction perpendicular to a surface of the value document (10) is greater than 30% of the total thickness of the value document in the region of the cavity (22; 42; 52; 62, 64) or cavities (22; 42; 52; 62, 64) and/or greater than 20 µm.

12. The method according to any of the preceding claims, wherein the cavity (22; 42; 52; 62, 64) or at least two of the cavities (22; 42; 52; 62, 64) are of line-shaped configuration.

13. The method according to any of the preceding claims, wherein the value document (10) comprises a substrate (20) which has partial or, preferably, complete piercings (22; 42; 52; 62), and the piercings (22; 42; 52; 62) are covered on both sides by cover layers (30) held on the substrate (20), and the covered piercings (22; 42; 52; 62, 64) form the cavities.

14. The method according to claim 13, wherein the piercings (22; 42; 52; 62, 64) are disposed in a motif region (12) of the value document (10).

15. The method according to claim 14, wherein the motif region (12) has a changed visual impression in incident light and/or transmitted light, and/or is configured in the form of a pattern, signs or an encoding.

16. The method according to any of claims 13 to 15, wherein the piercings (22; 42; 52; 62) are of line-shaped configuration and preferably have a width between 0.05 mm and 1 mm.

## Revendications

1. Procédé destiné à l'examen d'un document de valeur (10) en forme de feuille ou de carte d'un type prédéterminé, doté d'une caractéristique de sécurité (22, 24, 26) comportant une ou plusieurs cavités (22; 42; 52; 62, 64) formées dans le document de valeur (10) et dont l'étendue dépasse dans au moins un sens prédéterminé 10 µm, dans lequel des valeurs de transmission sont décelées en résolution locale pour la transmission d'ultrasons dans une plage de fréquences prédéterminée, et dans lequel, en utilisant les valeurs de transmission, il est vérifié si un nombre prédéterminé des valeurs de transmission restent en-dessous d'une valeur seuil de transmission prédéterminée qui correspond à une transmission inférieure à la transmission d'au moins une zone de référence (152) du document de valeur (10) ou d'au moins un document de valeur de référence ne comportant pas la cavité (22; 42; 52; 62, 64) ou les cavités (22; 42; 52; 62, 64).

2. Procédé selon la revendication 1, dans lequel les ultrasons ont une fréquence située dans la plage de 50 kHz à 800 kHz.

3. Procédé selon une des revendications précédentes, dans lequel, pour le décèlement des valeurs de transmission, des impulsions ultrasonores sont utilisées.

4. Procédé selon une des revendications précédentes, dans lequel la valeur seuil de transmission est décelée en utilisant les valeurs de transmission décelées.

5. Procédé selon une des revendications de 1 à 3, dans lequel la valeur seuil de transmission a été décelée par des examens de documents de valeur de référence du même type.

6. Procédé selon une des revendications précédentes, dans lequel, lors de la vérification, il est décelé si la valeur de référence respective se situe à l'intérieur d'un intervalle prédéterminé dont la limite supérieure est la valeur seuil de transmission.

7. Procédé selon une des revendications précédentes, dans lequel, lors de la vérification, uniquement des valeurs de transmission pour une zone (151) prédéterminée du document de valeur

8. Procédé selon la revendication 7, dans lequel, lors de la vérification, il est aussi tenu compte de la répartition des valeurs de transmission dans la zone (151) prédéterminée et/ou des valeurs de transmission qui, dans la zone prédéterminée, sont inférieures à la valeur seuil de transmission.

9. Procédé selon une des revendications précédentes, dans lequel il est en outre vérifié si les endroits qui correspondent au nombre prédéterminé de valeurs de transmission constituent un ensemble d'un seul tenant.

10. Procédé selon une des revendications précédentes, dans lequel une extension de la cavité (22; 42; 52; 62, 64) ou des cavités (22; 42; 52; 62, 64) dans le un ou un autre sens prédéterminé pour la cavité respective parallèlement à une surface du document de valeur (10) est supérieure à 100 µm.

11. Procédé selon une des revendications précédentes, dans lequel une extension de la cavité ou des cavités (22; 42; 52; 62, 64) dans un sens perpendiculaire à une surface du document de valeur (10) est supérieure à 30% de l'épaisseur totale du document de valeur dans la zone de la cavité (22; 42; 52; 62, 64) ou des cavités (22; 42; 52; 62, 64) et/ou supérieure à 20 µm.

12. Procédé selon une des revendications précédentes, dans lequel la cavité (22; 42; 52; 62, 64) ou au moins deux des cavités (22; 42; 52; 62, 64) sont formées linéairement.

13. Procédé selon une des revendications précédentes, dans lequel le document de valeur (10) comprend un substrat (20) comportant des transpercements (22; 42; 52; 62) partiels ou de préférence complets, et les transpercements (22; 42; 52; 62) sont recouverts des deux côtés par des couches de recouvrement (30) maintenues au substrat (20), et les transpercements (22; 42; 52; 62, 64) recouverts constituent les cavités.

14. Procédé selon la revendication 13, dans lequel les transpercements (22; 42; 52; 62, 64) sont agencés dans une zone de motif (12) du document de valeur (10).

15. Procédé selon la revendication 14, dans lequel la zone de motif (12) présente une impression visuelle modifiée en lumière incidente et/ou en lumière transmise et/ou est réalisée sous forme d'un dessin, de caractères ou d'une codification.

16. Procédé selon une des revendications de 13 à 15, dans lequel les transpercements (22; 42; 52; 62) sont formés linéairement et présentent de préférence une largeur située entre 0,05 mm et 1 mm.
